# EUROPÄISCHE PATENTSCHRIFT

(11) **EP 2 229 668 B1**
(45) Veröffentlichungstag und Bekanntmachung des Hinweises auf die Patenterteilung: **23.09.2015**
(21) Anmeldenummer: 08858767.0
(22) Anmeldetag: 11.12.2008
(51) Int. Cl.: G08G 1/16, H04L 29/08

(54) **ÜBERTRAGUNG VON FAHRZEUG-RELEVANTEN DATEN EINES FAHRZEUGS ÜBER MOBILE KOMMUNIKATION**
TRANSMISSION OF VEHICLE-RELEVANT DATA OF A VEHICLE VIA MOBILE COMMUNICATION
TRANSFERT DE DONNÉES RELATIVES À UN VÉHICULE PAR COMMUNICATION MOBILE

(30) Priorität: 11.12.2007 DE 102007059829; 14.02.2008 DE 102008009331; 26.02.2008 DE 102008011196; 30.04.2008 DE 102008021723; 30.04.2008 DE 102008021725; 30.04.2008 DE 102008021780; 10.09.2008 DE 102008041979; 21.10.2008 DE 102008043010; 22.10.2008 DE 102008043080; 22.10.2008 DE 102008043081; 22.10.2008 DE 102008043050; 22.10.2008 DE 102008043075
(43) Veröffentlichungstag der Anmeldung: 22.09.2010
(73) Patentinhaber: Continental Teves AG & Co. oHG, 60488 Frankfurt (DE)
(72) Erfinder: STÄHLIN, Ulrich, 65670 Eschborn (DE); MENZEL, Marc, 35043 Marburg (DE); SCHÄFER, Maik, 88048 Friedrichshafen (DE); BAIER, Robert, 64807 Dieburg (DE); MOELLER, Ulrich, 83607 Holzkirchen (DE); GEE, Robert, Lake Barrington 60010 (US); ERDEM, Bettina, 61462 Mammolshain (DE); WILLNECKER, Thomas, 71093 Weil im Schönbuch (DE); BAUER, Oleg, 35396 Giessen (DE); AUNKOFER, Maik, 93326 Abensberg (DE)
(74) Vertreter: Bonn, Roman Klemens
(86) Internationale Anmeldenummer: PCT/EP2008/067344
(87) Internationale Veröffentlichungsnummer: WO 2009/074655

(56) Entgegenhaltungen:
- EP-A- 1 705 835
- WO-A-2004/049741
- US-A1- 2006 015 242
- US-A1- 2007 106 431

## Beschreibung

### Gebiet der Erfindung

Die Erfindung betrifft die Kommunikations- und Sicherheitstechnik für Fahrzeuge. Insbesondere betrifft die Erfindung eine Kommunikationseinrichtung für ein Fahrzeug zum drahtlosen Übertragen von Fahrzeug-relevanten Daten an ein anderes Fahrzeug oder an eine Infrastruktur, ein Fahrerassistenzsystem, ein Fahrzeug mit einer Kommunikationseinrichtung, die Verwendung einer Kommunikationseinrichtung in einem Fahrzeug, ein Verfahren, ein Computerprogrammprodukt und ein computerlesbares Medium.

### Technologischer Hintergrund

Techniken für Fahrzeug-zu-Fahrzeug Kommunikation und Fahrzeug-zu-Infrastruktur Kommunikation (C2X Kommunikation) auf Basis von zellulärem Mobilfunk sind bekannt. Floating-Car-Data ist ebenfalls bereits bekannt.

C2X Kommunikation wird typischerweise mit einer WLAN-basierten Kommunikationstechnik in Verbindung gesetzt. Der wichtigste Anwendungsfall für die C2X Kommunikation ist die Warnung vor verdeckt herannahenden Fahrzeugen, z. B. an Kreuzungen. In diesem Kontext wird auch von Kreuzungsassistenz-Funktion gesprochen.

Für die C2X Anwendungen ist ein Frequenzband bei 5,9 GHz freigegeben (genauer: zwischen 5875 MHZ bis 5905 MHz). Leider werden Funkwellen in diesem Frequenzbereich, genau wie sichtbares Licht, von Häusern, Büschen, parkenden Autos, etc. absorbiert. Aus diesem Grund wird eine direkte Kommunikation der Fahrzeuge an einer Kreuzung erst möglich, wenn die Fahrzeuge Sichtkontakt zueinander haben, wodurch der Nutzen der C2X Kommunikation für die Kreuzungsassistenz-Funktion eingeschränkt ist. In den lizenzfreien ISM-Bändern (Industrial, Scientific, and Medical Band, Frequenzbänder unterhalb 1GHz) muss die Sichtverbindung nicht zwingend erforderlich sein, im Gegensatz zum 5.9GHz Frequenzband, jedoch ist die verfügbare Bandbreite dort deutlich geringer.

US 2007/106431 offenbart eine Fahrzeug- zu Fahrzeug Kommunikationseinrichtung, die in einem ersten Fahrzeug befestigt ist. Fahrzeug- zu Fahrzeug Kommunikationseinrichtung umfasst einen Sender und Empfänger zur Kommunikation mit Vorrichtungen, die an anderen Fahrzeugen befestigt sind, einen Speicher, der die zur Kommunikation notwendige Wellenlänge aufnimmt und eine Kommunikationssteuereinheit. Gemäß der D1 wird, wenn ein bestimmtes Fahrzeug eine gefährliche Entfernung vom eigenen Fahrzeug entfernt ist, durch die Kommunikationssteuereinheit mittels einer dem entsprechenden Fahrzeug zugewiesenen Wellenlänge identifiert.

WO 2004049741 beschreibt ein Datenkommunikationssystem.

### Zusammenfassung der Erfindung

Es ist eine Aufgabe der Erfindung, eine verbesserte Kommunikation zwischen Fahrzeugen zu ermöglichen.

Es sind eine Kommunikationseinrichtung für ein Fahrzeug, ein Fahrzeug, eine Verwendung, ein Verfahren, ein Computerprogrammprodukt und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Kommunikationseinrichtung, das Fahrerassistenzsystem, das Fahrzeug, die Verwendung, das Verfahren, das Computerprogrammprodukt und das computerlesbare Medium. In anderen Worten lassen sich die im Folgenden im Hinblick auf die Kommunikationseinrichtung genannten Merkmale auch in dem Fahrerassistenzsystem, dem Verfahren, dem Programmelement oder dem computerlesbaren Medium implementieren, und umgekehrt. Gemäß einem Ausführungsbeispiel der Erfindung ist eine Kommunikationseinrichtung für ein Fahrzeug zum drahtlosen Übertragen von Fahrzeug-relevanten Daten an ein anderes Fahrzeug oder eine Infrastruktur angegeben, wobei die Kommunikationseinrichtung eine erste Kommunikationseinheit zum Übermitteln von ersten Fahrzeug-relevanten Daten an das andere Fahrzeug und eine zweite Kommunikationseinheit zum Übermitteln von ausgewählten zweiten Fahrzeug-relevanten Daten an das andere Fahrzeug aufweist.

Durch die Verwendung von zwei Kommunikationseinheiten können wichtige, limitierte Informationen über die zweite Kommunikationseinheit übermittelt werden, so dass gewährleistet ist, dass diese Informationen auch beim Empfänger ankommen. Die übrigen Daten können - ggf. mit höherer Bandbreite aber geringerer Reichweite - über die erste Kommunikationseinheit übermittelt werden. Auf diese Weise kann erreicht werden, dass die wichtigsten Daten unabhängig von den Umgebungsverhältnissen der Fahrzeuge den Empfänger erreichen.

Durch die Verwendung von bereits existierenden Kommunikationstechniken für die zweite Kommunikationseinheit (aber auch für die erste Kommunikationseinheit) kann das Problem der Abschattung durch Gebäude, etc. sehr einfach und preiswert umgangen werden. Die Anforderungen einer WLAN-basierten Kommunikation werden hierbei nicht berührt.

Gemäß einem weiteren Ausführungsbeispiel der Erfindung ist die zweite Kommunikationseinheit als drahtlose Zugangs- und Fahrtberechtigungseinheit ausgeführt.

Somit erfüllt die zweite Kommunikationseinheit eine Doppelfunktion. Einerseits kann sie für die Kommunikation mit den anderen Fahrzeugen bzw. der Infrastruktur eingesetzt werden, um die ausgewählten zweiten Daten zu übertragen. Andererseits kann sie zur Zugangsberechtigung und/oder zum Starten des Fahrzeugs eingesetzt werden.

Gemäß einem weiteren Ausführungsbeispiel der Erfindung ist die erste Kommunikationseinheit zum Übermitteln der ersten Fahrzeug-relevanten Daten auf Basis von WLAN ausgeführt.

Gemäß einem weiteren Ausführungsbeispiel der Erfindung werden die ersten Fahrzeug-relevanten Daten mit einer ersten bandbegrenzten Frequenz übermittelt. Ebenso werden die zweiten Fahrzeug-relevanten Daten mit einer zweiten bandbegrenzten Frequenz übermittelt, die geringer ist als die erste Frequenz.

Auf diese Weise kann die Übertragungsreichweite der zweiten Daten erhöht werden, wenn die Funkübertragungsstrecke durch Hindernisse blockiert wird.

Gemäß einem weiteren Ausführungsbeispiel der Erfindung handelt es sich bei den zweiten Daten um Basisinformationen, wie z. B. eine Fahrzeugidentifikation (Fahrzeug-ID), eine Position des Fahrzeugs, eine Geschwindigkeit des Fahrzeugs und/oder eine Bewegungsrichtung des Fahrzeugs.

Hierfür sind im Fahrzeug entsprechende Sensoren vorgesehen, um die Fahrzeugposition, die Fahrzeuggeschwindigkeit und die Bewegungsrichtung zu erfassen.

Gemäß einem weiteren Ausführungsbeispiel der Erfindung werden als zweite Fahrzeug-relevante Daten nur Daten übermittelt, die sich hinsichtlich der letzten Übermittlung signifikant verändert haben.

Steht das Fahrzeug beispielsweise, wird die Position des Fahrzeugs nicht erneut übermittelt. Bewegt sich das Fahrzeug mit hoher Geschwindigkeit, wird ggf. die Fahrzeugposition mit höherer Frequenz übermittelt. Bremst das Fahrzeug stark, werden die Geschwindigkeit und/oder die Position des Fahrzeugs entsprechend oft übermittelt, wohingegen bei gleichförmiger geradliniger Bewegung des Fahrzeugs eine geringere Übermittlungsfrequenz ausreicht.

Auf diese Weise kann der Datenverkehr individuell angepasst und somit reduziert werden.

Gemäß einem weiteren Ausführungsbeispiel der Erfindung weisen die ersten Daten und die zweiten Daten jeweils eine Fahrzeugidentifikation auf, wobei eine Zuordnung der ersten Daten zu den zweiten Daten (oder umgekehrt) über diese Fahrzeugidentifikation erfolgt.

Gemäß einem weiteren Ausführungsbeispiel der Erfindung werden die ersten Daten und die zweiten Daten im selben Format übermittelt. Auf diese Weise kann sichergestellt werden, dass ein Endgerät auch die zweiten Daten lesen kann, wenn es die ersten Daten lesen kann (und umgekehrt).

Gemäß einem weiteren Ausführungsbeispiel der Erfindung ist die Kommunikationseinrichtung zur Kreuzungsassistenz ausgeführt.

Gemäß einem weiteren Ausführungsbeispiel der Erfindung übermittelt die Kommunikationseinrichtung die zweiten Daten nur dann, wenn der Motor des Fahrzeugs läuft, der Warnblinker des Fahrzeugs aktiviert ist oder die Fahrzeugsensorik einen Unfall detektiert hat.

In allen anderen Fällen kann die zweite Kommunikationseinheit eine andere Funktion übernehmen, beispielsweise die Funktion eines elektronischen Schlüssels.

Gemäß einem weiteren Ausführungsbeispiel der Erfindung wird zur Congestion Control bei der Kommunikation über die zweite Kommunikationseinheit Carrier Sense Multiple Access verwendet.

Gemäß einem weiteren Ausführungsbeispiel der Erfindung wird die zweite Kommunikationseinheit zum Übermitteln nur von priorisierten Daten verwendet.

Gemäß einem weiteren Ausführungsbeispiel der Erfindung ist die zweite Kommunikationseinheit zur Kommunikation zwischen der Kommunikationseinrichtung und einer Infrastruktur ausgeführt.

Gemäß einem weiteren Ausführungsbeispiel der Erfindung ist die zweite Kommunikationseinheit zur periodischen Übermittlung eines Suchbefehls an einen Fußgänger ausgeführt.

Gemäß einem weiteren Ausführungsbeispiel der Erfindung ist die zweite Kommunikationseinheit zur Bereitstellung einer Redundanz für eine Sicherheitsanwendung des Fahrzeugs ausgeführt.

Gemäß einem weiteren Ausführungsbeispiel der Erfindung ist die Kommunikationseinrichtung zur Fusion von Messdaten eines einfachen Umfeldsensors mit von einem anderen Fahrzeug oder einer Infrastruktur empfangenen Daten zur Situationsinterpretation ausgeführt.

Gemäß einem weiteren Ausführungsbeispiel der Erfindung ist die erste Kommunikationseinheit ausgeführt zur Auswahl eines Kommunikationspartners und Festlegung, über welche Kommunikationseinrichtung und gegebenenfalls über welchen Kommunikationskanal weitere Kommunikation zwischen dem Fahrzeug und dem Kommunikationspartner stattfinden soll.

Gemäß einem weiteren Ausführungsbeispiel der Erfindung ist die zweite Kommunikationseinheit ausgeführt, den Aufbau einer Kommunikationsverbindung nach außen und/oder die Annahme einer Kommunikationsverbindung freizugegeben.

Gemäß einem weiteren Ausführungsbeispiel der Erfindung die Kommunikationseinrichtung zur Warnung eines benachbarten Fahrzeugs nach einem Unfall des eigenen Fahrzeugs über die zweite Kommunikationseinheit ausgeführt.

Gemäß einem weiteren Ausführungsbeispiel der Erfindung ist die Kommunikationseinrichtung zum Aussenden einer Mitteilung bei Empfang einer eigenen Identifikationsnummer zum Diebstahlschutz ausgeführt.

Gemäß einem weiteren Ausführungsbeispiel der Erfindung weist die Kommunikationseinrichtung einen Schlafmodus auf, wobei die Kommunikationseinrichtung ausgeführt ist im Schlafmodus entscheiden zu können, ob es sich bei einer empfangenen Nachricht um eine Nachricht speziell für das Fahrzeug handelt oder um eine allgemeine C2X Nachricht für eine Vielzahl an Fahrzeugen.

Gemäß einem weiteren Ausführungsbeispiel der Erfindung ist die Kommunikationseinrichtung ausgeführt zum Empfang von Nachrichten eines Verkehrszeichens (601) durch die zweite Kommunikationseinheit und zur Weiterverwertung der empfangenen Nachricht durch ein Fahrerassistenzsystem.

Gemäß einem weiteren Ausführungsbeispiel der Erfindung ist ein Fahrerassistenzsystem mit einer oben beschriebenen Kommunikationseinrichtung angegeben.

Gemäß einem weiteren Ausführungsbeispiel der Erfindung ist ein Fahrzeug mit einer oben beschriebenen Kommunikationseinrichtung angegeben.

Gemäß einem weiteren Ausführungsbeispiel der Erfindung ist die Verwendung einer oben beschriebenen Kommunikationseinrichtung in einem Fahrzeug angegeben.

Gemäß einem weiteren Ausführungsbeispiel der Erfindung ist ein Verfahren zur Übertragung von Fahrzeug-relevanten Daten eines Fahrzeugs über eine mobile Kommunikation an ein anderes Fahrzeug oder eine Infrastruktur angegeben, bei dem erste Fahrzeug-relevante Daten an das andere Fahrzeug bzw. die Infrastruktur durch eine erste Kommunikationseinheit übermittelt werden, und bei dem ausgewählte zweite Fahrzeug-relevante Daten an das andere Fahrzeug bzw. die Infrastruktur durch eine zweite Kommunikationseinheit übermittelt werden, wobei ersten fahrzeugrelevanten Daten mit einer ersten bandbegrenzten Frequenz übermittelt werden und die zweiten fahrzeugrelevanten Daten mit einer zweiten bandbegrenzten Frequenz übermittelt werden, die geringer ist als die erste Frequenz und die ersten und die zweiten Daten jeweils eine Fahrzeugidentifikation aufweisen und eine Zuordnung der ersten Daten zu den zweiten Daten über diese Fahrzeugidentifikation erfolgt.

Gemäß einem weiteren Ausführungsbeispiel der Erfindung ist zur Durchführung des Verfahrens die zweite Kommunikationseinheit als drahtlose Zugangs- und Fahrtberechtigungseinheit ausgeführt, wobei die erste Kommunikationseinheit zum Übermitteln der ersten Fahrzeug-relevanten Daten auf Basis von WLAN ausgeführt ist. Weiterhin werden die ersten Fahrzeugrelevanten Daten mit einer ersten bandbegrenzten Frequenz übermittelt. Ebenso werden die zweiten Fahrzeug-relevanten Daten mit einer zweiten bandbegrenzten Frequenz übermittelt, die geringer ist als die erste Frequenz.

Weiterhin ist, gemäß einem weiteren Ausführungsbeispiel der Erfindung, ein Computerprogrammprodukt angegeben, das, wenn es auf einem Prozessor ausgeführt wird, den Prozessor anleitet, die oben beschriebenen Schritte durchzuführen.

Gemäß einem weiteren Ausführungsbeispiel der Erfindung ist ein computerlesbares Medium angegeben, auf dem ein Computerprogrammprodukt gespeichert ist, das, wenn es auf einem Prozessor ausgeführt wird, den Prozessor anleitet, die oben angegebenen Schritte durchzuführen.

Gemäß einem Ausführungsbeispiel der Erfindung erfolgt der Einsatz der Zündschlüsselfunktechnik zusätzlich zu WLANbasierter Kommunikation nur bei laufendem Motor und im Falle einer Panne auch im Stand des Fahrzeugs.

Weiterhin ist es möglich, nur wenige Daten über die zweite Kommunikationseinheit (beispielsweise Funkschlüsselsystem) zu senden, um die geringe Bandbreite der zweiten Kommunikationseinheit optimal zu nutzen. Beispielsweise werden Daten nur gesendet, wenn sie sich signifikant verändert haben.

Bei der Kommunikation wird die gleiche Fahrzeugidentifikation (Fahrzeug-ID) genutzt, wie bei der WLAN-Kommunikation, um die Daten einander zuordnen zu können.

Beispielsweise wird über die zweite Kommunikationseinheit nur ein sog. Single-Hop Broadcast vorgenommen, wohingegen über die erste Kommunikationseinheit (WLAN-System) auch eine Multi-Hop Kommunikation stattfinden kann.

An dieser Stelle sei darauf hingewiesen, dass im Kontext der vorliegenden Erfindung GPS stellvertretend für sämtliche globale Navigationssatellitensysteme (GNSS) steht, wie z. B. GPS, Galileo, GLONASS (Russland), Compass (China), IRNSS (Indien), ...

Unter dem Begriff "digitale Karten" sind auch Karten für fortschrittliche Fahrerassistenzsysteme (ADAS, Advanced Driver Assistance System) zu verstehen, ohne dass eine Navigation stattfindet.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Im Folgenden werden mit Verweis auf die Figuren bevorzugte Ausführungsbeispiele der Erfindung beschrieben.
Fig. 1 zeigt eine schematische Darstellung einer Kommunikationseinrichtung gemäß einem Ausführungsbeispiel der Erfindung.
Fig. 2 zeigt eine schematische Darstellung eines Gesamtsystems gemäß einem Ausführungsbeispiel der Erfindung.
Fig. 3 zeigt ein Flussdiagramm eines Verfahrens gemäß einem Ausführungsbeispiel der Erfindung.
Fig. 4 zeigt ein Flussdiagramm eines Verfahrens gemäß einem Ausführungsbeispiel der Erfindung.
Fig. 5 zeigt ein Flussdiagramm eines C2C Modus gemäß einem Ausführungsbeispiel der Erfindung.
Fig. 6 zeigt die Übertragung von Information über eine Geschwindigkeitsbeschränkung für jede Fahrspur getrennt.

Die Darstellungen in den Figuren sind schematisch und nicht maßstäblich.

In der folgenden Figurenbeschreibung werden für die gleichen oder ähnlichen Elemente die gleichen Bezugsziffern verwendet.

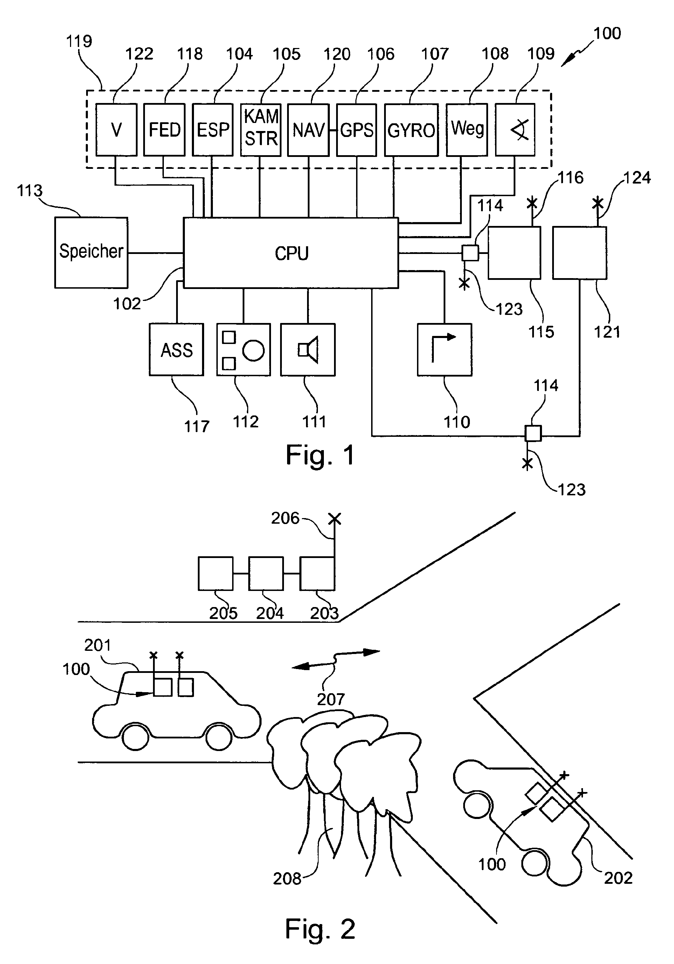

Fig. 1 zeigt eine schematische Darstellung einer Kommunikationseinrichtung 100 für ein Fahrzeug zum drahtlosen Übertragen von Fahrzeug-relevanten Daten an ein anderes Fahrzeug oder an eine stationäre Infrastruktur. Die Kommunikationseinrichtung 100 ist beispielsweise in dem Fahrzeug installiert und weist eine erste Kommunikationseinheit 115 mit einer Antenne 116, eine zweite Kommunikationseinheit 121 mit einer Antenne 124 sowie eine Steuereinheit 102 auf.

Zu sendende Daten, welche von der Steuereinheit 102, die beispielsweise in Form einer CPU ausgeführt ist, an die Kommunikationseinheit 115 oder auch an die Kommunikationseinheit 121 übertragen werden, können jeweils über eine oder mehrere Verschlüsselungseinrichtungen 114 verschlüsselt werden. Zur Übertragung der Daten von der CPU 102 an die zweite Kommunikationseinheit 121 kann dabei die Antenne 123 vorgesehen werden, welche beispielsweise an der Verschlüsselungseinheit 114 angebracht ist. Zum Empfang dieser Daten und zum Senden an die anderen Fahrzeuge weist die zweite Kommunikationseinheit 121 ebenfalls eine Antenne 124 auf. Die zweite Kommunikationseinheit kann jedoch auch Teil der Kommunikationseinrichtung 100 sein.

Ebenso können auch die empfangenen Daten, die von der Kommunikationseinheit 115 oder von der Kommunikationseinheit 121 an die Steuereinheit 102 übertragen werden, von der Verschlüsselungseinheit 114 entschlüsselt werden.

Auf diese Weise und durch den dynamischen Wechsel der Identifikationsnummer kann die Gefahr eines Missbrauchs verringert werden und der Datenschutz sichergestellt werden.

Mit der Steuereinheit 102 ist eine Eingabeeinheit 112 verbunden. Durch die Eingabeeinheit 112 können verschiedene Einstellungen der Kommunikationseinrichtung und ggf. auch der damit zusammenhängenden Navigationseinheit 120 vorgenommen werden. Weiterhin ist eine optische Ausgabeeinheit in Form eines Monitors 110 vorgesehen, mit der beispielsweise Zielführungsinformationen ausgegeben werden können. Darüber hinaus können diese Zielführungsinformationen und ggf. auch Warnhinweise über eine akustische Ausgabeeinheit 111 ausgegeben werden. Die Ausgabe über die akustische Ausgabeeinheit 111 hat den Vorteil, dass der Fahrer weniger vom aktuellen Verkehrsgeschehen abgelenkt wird.

In einem Speicherelement 113, das mit der Steuereinheit 102 verbunden ist oder in der Steuereinheit 102 integriert ist, sind die digitalen Kartendaten (z. B. als Navigationskartendaten) in Form von Datensätzen abgelegt. Beispielsweise sind in dem Speicherelement 113 auch zusätzliche Informationen über Verkehrsbeschränkungen, Infrastruktureinrichtungen und dergleichen abgelegt und den Datensätzen zugeordnet.

Weiterhin ist ein Fahrerassistenzsystem 117 vorgesehen, welches mit den digitalen Kartendaten, Positionen von anderen Objekten oder anderen Informationen aus der Kommunikation versorgt wird.

Zur Bestimmung der aktuellen Fahrzeugposition weist die Kommunikationseinrichtung 100 die Navigationseinheit 120 und die Positionierungseinheit 106 auf, wobei die Positionierungseinheit zum Empfang von Positionssignalen von beispielsweise Galileo-Satelliten oder GPS-Satelliten ausgelegt ist. Natürlich kann die Navigationseinheit mit dem Satellitennavigationsempfänger 106 auch für andere Satellitennavigationssysteme ausgeführt sein.

Die Positionierungseinheit 106 ist mit der Steuereinheit 102 verbunden. Auch ist die Navigationseinheit 120 mit der Steuereinheit 102 verbunden. Weiterhin besteht eine direkte Verbindung zwischen der Navigationseinheit 120 und der Positionierungseinheit 106. Somit können die GPS-Signale direkt an die CPU 102 übermittelt werden.

Da die Positionssignale beispielsweise im innerstädtischen Bereich nicht immer empfangbar sind, weist die Kommunikationseinrichtung zur Durchführung einer Koppelnavigation zudem einen Richtungssensor 107, einen Wegstreckensensor 108, einen Lenkradwinkelsensor 109, einen Federwegsensor 118, eine ESP-Sensorik 104 und ggf. einen Detektor 105, beispielsweise in Form einer Kamera oder eines Strahlsensors (Radar- oder Lidarsensor), auf. Weiterhin weist die Detektionseinheit 119 einen Geschwindigkeitsmesser 122 auf.

Die Signale des GPS-Empfängers und der übrigen Sensoren werden in der Steuereinheit 102 bearbeitet. Die aus diesen Signalen ermittelte Fahrzeugposition wird vom Map Matching mit den Straßenkarten abgeglichen. Die so gewonnene Zielführungsinformation wird über den Monitor 110 schließlich ausgegeben.

Die Kommunikationseinheit 121 ist als drahtlose Zugangs- und Fahrberechtigungseinheit ausgeführt (RKE, Remote Keyless Entry). In nahezu allen aktuellen PKW-Baureihen werden solche drahtlose Zugangs- und Fahrberechtigungseinheiten benutzt, welche innerhalb der länderspezifischen und lizenzfreien ISM-Frequenzbändern (Industrial, Scientific, and Medical Band) funken. Zur Übersicht sei beispielhaft und nur als Auszug zu verstehende Übersicht in der Tabelle 1 verwiesen bezüglich der Frequenz und der erlaubten Sendeleistung. Diese im Fahrzeug verbauten Einheiten können, falls keine Hindernisse im Weg stehen, mehr als 1000m Reichweite erreichen. Aufgrund der relativ hohen Wellenlänge werden die Signale sehr leicht um nahezu jedes Hindernis herum gebeugt. Weiterhin ist auch nur eine begrenzte Bandbreite für die Datenübertragung verfügbar, wodurch diese Frequenzen als alleinige Träger der C2X Kommunikation nicht in Frage kommen, falls große Datenmengen übertragen werden müssen.

**Tabelle 1**

| Frequenzband und Sendeleistung / Marktübersicht | | |
|---|---|---|
| EU | 434MHz | +10dBm |
| | 868MHz | +14dBm |
| US | 315MHz | -25.6 ... -5.6dBm |
| | 902MHz | -7.25dBm |
| | 902MHz | +30dBm für DSSS |
| JP | 315MHz | -6dBm ... -16dBm |
| | 426MHz | 0dBm an 500hm gemessen |
| | 429MHz | |
| | | +10dBm an 500hm gemessen |
| KOR | 434MHz | +4.7dBm |
| | 447MHz | +7dBm an 500hm gemessen |
| CHN | 434MHz | +10dBm |
| | 868MHz | +7dBm |

Ein Kernaspekt der Erfindung ist darin zu sehen, dass die WLAN-basierte Kommunikation (der ersten Kommunikationseinheit) um zusätzliche Nachrichten erweitert wird, die über das Zündschlüsselsystem 121, 124 ausgestrahlt und empfangen werden. Um pro Fahrzeug eine möglichst geringe Bandbreite zu verbrauchen, werden nur sehr wenige Basisinformationen über die "Zündschlüssel"-Kommunikation übertragen: Fahrzeug-ID, Ort, Geschwindigkeit und Bewegungsrichtung. Mit diesen Informationen kann dann eine Basisfunktionalität bzw. eine Kreuzungsassistenz aufgebaut werden. Sobald die Fahrzeuge Sichtkontakt oder Kontakt über eine Relaisstation (sog. Road Side Unit, RSU) oder ein anderes Fahrzeug bekommen, können weitere Informationen über die WLAN-basierte Kommunikation ausgetauscht werden und der gesamte Satz an C2X Funktionen kann genutzt werden.

Damit die Daten von WLAN- und "Zündschlüssel"-Kommunikation einander zugeordnet werden können, muss bei beiden Systemen beispielsweise die gleiche Fahrzeugidentifikation (Fahrzeug-ID) verwendet werden. Diese ID kann dynamisch geändert werden, um dem Datenschutz Rechnung zu tragen. Die übertragenen Daten besitzen beispielsweise auf allen Übertragungswegen das gleiche Format, um vergleichbar zu sein. Um weiterhin Bandbreite einzusparen, werden nicht ständig alle oben genannten Daten versendet, sondern nur diejenigen Daten, die sich seit der letzten Sendung signifikant verändert haben. Hierbei handelt es sich z. B. um Orts- bzw. Positionsangaben, die beispielsweise alle 250 Millisekunden versendet werden. Die aktuelle Fahrzeuggeschwindigkeit wird bei gleichförmiger Bewegung alle 1000 Millisekunden, bei Bremsung alle 250 Millisekunden gesendet. Die Bewegungsrichtung wird bei Geradeausfahrt des Fahrzeugs alle 2000 Millisekunden, bei Kurvenfahrt je nach Kurvenradius alle 250 Millisekunden bis 1000 Millisekunden versendet.

Die entsprechenden Daten werden über die Detektionseinrichtung 119 gemessen und dann beispielsweise im Speicher 113 abgelegt, ggf. nach einer Aufbereitung oder Analyse durch die CPU 102.

Um die Fahrtberechtigungsfunktion nicht zu beeinträchtigen, wird im Stand bei abgeschaltetem Motor das Modul wie bisher zur Öffnung und Schließung der Türen verwendet. Bei laufendem Motor wird dann in den C2X-Modus gewechselt. Sollte ein Fahrzeug mit einer Panne liegen bleiben und das Warnlicht eingeschaltet haben, wird die C2X Kommunikation natürlich auch bei abgeschaltetem Motor aufrechterhalten.

In anderen Worten kann die zweite Kommunikationseinheit in jedem Fall bei laufendem Motor und im Stand im Falle einer Panne für C2X verwendet werden.

Das oben beschriebene Kreuzungsszenario ist ein Ausführungsbeispiel der vorliegenden Erfindung. Ein Kernaspekt der Erfindung besteht darin, dass eine Fahrtberechtigungskommunikation für C2X zum Übermitteln ausgewählter grundlegender Daten bei geringer Senderate verwendet wird. Diese Grundidee kann allgemein für C2X Anwendungen eingesetzt werden.

Erfolgt über die "normale" C2X Kommunikation (über die erste Kommunikationseinheit) bereits ein Datenaustausch mit Fahrzeugen aus einem großen Einzugsbereich (beispielsweise 300 m) und kann davon ausgegangen werden, dass keine Abschattungen die Kommunikation behindern, so kann die Kommunikation beispielsweise nur mittels der "normalen" C2X Kommunikation erfolgen.

Zur Congestion Control bei der Fahrtberechtigungskommunikation (also bei der Kommunikation über die zweite Kommunikationseinheit) wird beispielsweise Carrier Sense Multiple Access (CSMA) verwendet. Die sehr aufwendige Congestion Control der "normalen" C2X Kommunikation ist nicht notwendig, da bei der Fahrtberechtigungskommunikation kein Multi-Hop vorgesehen ist.

Fig. 2 zeigt eine schematische Darstellung eines Gesamtsystems gemäß einem Ausführungsbeispiel der Erfindung. Es sind zwei Fahrzeuge 201, 202 vorgesehen, welche jeweils eine Kommunikationseinrichtung 100 je mit zwei Kommunikationseinheiten aufweisen. Weiterhin ist eine Infrastruktur bzw. eine Zentrale vorgesehen, die aus einer Kommunikationseinheit 203 mit einer Antenne 206, einem Server 204 und einem Datenspeicher 205 besteht. Die beiden Fahrzeuge können miteinander und mit der Zentrale über die Funkübertragungsstrecke 207 kommunizieren, obgleich ein Hindernis z.B. in Form eines Waldes 208 eine Funkübertragung auf WLAN-Basis unmöglich macht.

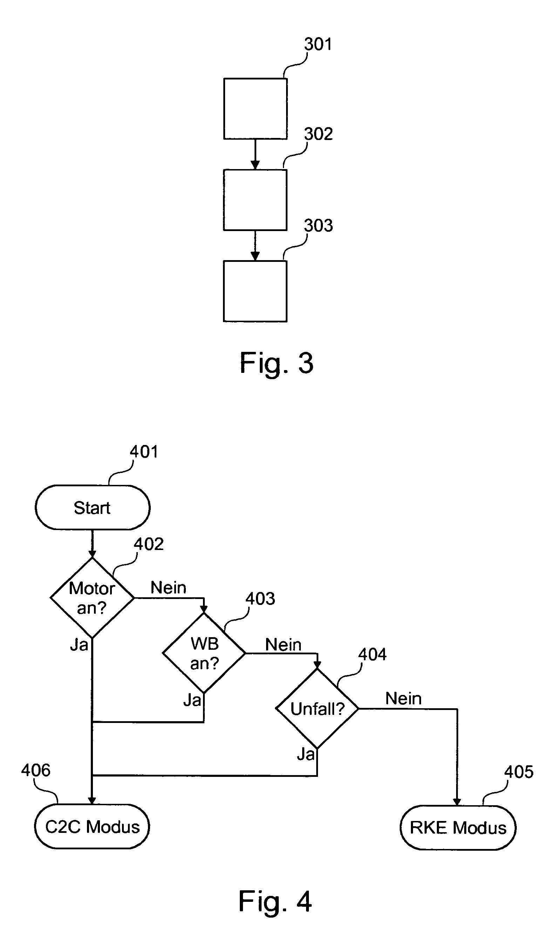

Fig. 3 zeigt ein Flussdiagramm eines Verfahrens, bei dem in Schritt 301 ausgewählte zweite Fahrzeug-relevante Daten (beispielsweise die aktuelle Fahrzeugposition zusammen mit einer Geschwindigkeit) an das andere Fahrzeug durch ein Fahrtberechtigungssystem übermittelt werden. In Schritt 302 erfolgt zusätzlich die Übermittlung erster Fahrzeug-relevanten an das andere Fahrzeug durch eine erste Kommunikationseinheit, beispielsweise eine Funkübertragung auf WLAN-Basis.

In Schritt 303 erfolgt dann die Übermittlung der Daten nur über WLAN, da eine sicher funktionierende WLAN-Verbindung hergestellt ist.

Im Folgenden werden weitere Ausführungsbeispiele der Erfindung beschrieben, die unabhängig voneinander oder auch in Kombination miteinander ausgeführt werden können:

### Erste Ausführungsbeispiele:

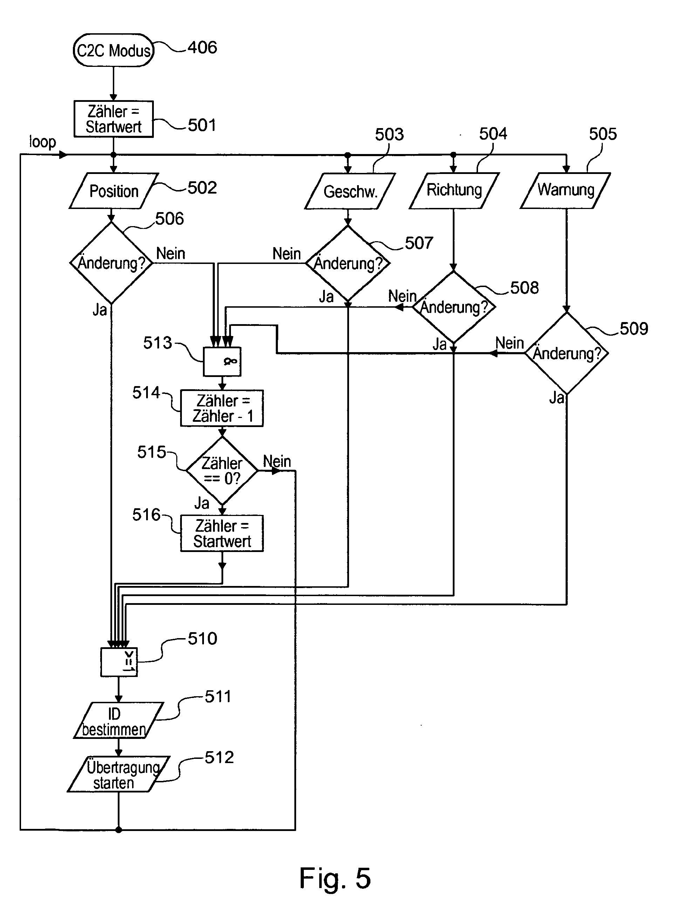

Fig. 4 und Fig. 5 zeigen Flussdiagramme von Verfahren gemäß Ausführungsbeispielen der Erfindung zur Verdeutlichung der Koexistenz C2X, RKE bzw. der Verwendung von zwei Kommunikationseinheiten.

Die Koexistenz bzw. die Abarbeitung beider Anwendungsfälle (C2X und RKE) als Integrationsschritt sei zunächst beispielhaft Anhand von Fig. 4. verdeutlicht. Nach einmaliger Initialisierung [Start] des Funkkommunikationssteuergerätes in Schritt 401 erfolgt eine Abfrage des Fahrzeugstatus [in Schritt 402 wird geprüft, ob der Motor angeschaltet ist; in Schritt 403 wird geprüft, ob der Warnblinker angeschaltet ist; in Schritt 404 wird geprüft, ob ein Unfallsensor angesprochen hat, ob also ein Unfall detektiert wurde] und darauf hin die Entscheidungsfindung des jeweiligen Modus [C2C Modus, RKE Modus]. Wird eine dieser Fragen mit Ja beantwortet, arbeitet das System im C2C Modus. Werden alle diese Fragen mit Nein beantwortet, arbeitet das System im RKE Modus.

Im RKE Modus sucht das Funkkommunikationssteuergerät 102 (siehe Fig. 1) nach zugehörigen Funksignalidentifikationsgebern. Dies kann aus Stromspargründen durch zyklisches Ein- und Ausschalten des Fahrzeugempfängers oder Fahrzeugtransceivers erfolgen. Innerhalb des Ein-Zyklus wird die Aufwachsequenz der gesendeten Schlüsselinformation im Falle eines Tastendrucks am Identifikationsgeber oder bei sogenannten Passiven Zugangssystemen automatisch bei Annäherung am Fahrzeug analysiert. Stimmen die übermittelte Identifikationsnummer im Protokoll sowie weitere technische Merkmale (Modulation, Datenrate, etc.) überein (siehe auch die dreizehnten Ausführungsbeispiele unten), so wird nach positiver Überprüfung die entsprechende Aktion am Fahrzeug eingeleitet, beispielsweise Öffnen oder Schließen der Fahrzeugtüren.

Im C2C oder C2X Modus 406 wird in Schritt 501 der Zähler mit dem Startwert gleichgesetzt. Dann werden zyklisch Informationen abgefragt, wie z.B. die Fahrzeugposition 502, Geschwindigkeit 503, Richtung des Fahrzeugs 504, Fahrzeug-Identifizierungsnummer sowie eventuell vorliegende Warnmeldungen 505 (beispielsweise Glatteis). Dies ist beispielhaft in Fig. 5 dargestellt.

In den Schritten 506, 507, 508 und 509 wird geprüft, ob Änderungen vorliegen.

Falls schnelle Änderungen in diesen Parametersätzen auftreten, erfolgt eine häufigere Übertragung wie bereits oben beschrieben.

Falls keine gravierende Änderungen auftreten, erfolgt die Übermittlung 512 der Daten mittels Funkübertragung über einen vorprogrammierten, festen Zeitpunkt und somit zyklisch. Hierzu wird bei jedem Durchlauf, bei dem keine Änderung der Parameter detektiert wurde (Schritt 513), der Zähler um eins verringert (Schritt 514). Erreicht der Zähler den Stand Null (Schritt 515), so wird er wieder auf den Startwert gesetzt (Schritt 516) und es erfolgt eine Übertragung der Daten. Für die Übertragung wird noch die ID bestimmt (Schritt 511), die sich zyklisch ändert, jedoch zwischen den beiden Kommunikationstechniken (z.B. WLAN und RKE) gleich ist, um eine Zuordnung der Daten zueinander zu ermöglichen. Es sind jedoch auch andere Metriken zur Bestimmung der Übertragung bzw. zur Bestimmung der Übertragungsrate von Daten möglich, z.B. Ableitungen aus dem im C2C-CC definierten Übertragungsstandard für C2X auf 5.9GHz. Es ist auch möglich, dass die Daten nur übertragen werden, wenn ein besonders kritischer Zustand eingetreten ist oder eintreten wird, also z.B. Gefahr für Leib und Leben besteht, oder wenn besonders schlechte Übertragungsbedingungen bei 5.9 GHz vorliegen.

Es ist zu beachten, dass der C2C- oder C2X-Modus prinzipiell durch weitere Dienste bzw. Modi auch während der Fahrt erweitert werden kann. So muss bei dem Passiven Zugangskontrollsystemen auch während der Fahrt immer zyklisch nach den Identifikationsgebern gesucht werden, ob sich diese noch innerhalb des Fahrzeugs befinden und eine Fahrberechtigung vorliegt.

Gleiches gilt für funkbasierende Reifendruckkontrollsysteme, die während der Fahrt den Zustand der Reifen (Druck, Temperatur, etc.) übermitteln.

Auch diese Modi lassen sich mit dem C2X Modus kombinieren, da die Kommunikation lediglich zeitlich synchronisiert werden muss.

Die erweiterten Modi (Passive Zugangskontroll- und Startsysteme sowie Reifendruckkontrollsysteme) sind aus Gründen der Übersichtlichkeit nicht in Fig. 5 ersichtlich.

Weiterhin können die Funksignale parallel verarbeitet werden.

### Zur Verwendung von RKE in Hinblick auf "Long Range" Kommunikation:

Bekannte funkbasierende Fahrzeugzugangssysteme (RKE) sind auf Reichweiten um die 30m ausgerichtet, um versehentliches Öffnen und Schließen des Fahrzeugs aus Überreichweiten zu vermeiden.

Neue Technologien ermöglichen jedoch eine kostengünstige Schaffung einer bidirektionalen Funkverbindung zwischen Identifikationsgebern und Fahrzeug. Dadurch kann eine aktuelle Rückmeldung des jeweiligen Schließzustandes erfolgen. Zudem ermöglicht die bidirektionale Schnittstelle weitere Komfortmerkmale wie beispielsweise das Abfragen des Kilometerstandes oder auch das sichere Starten und Abschalten der Standheizung. Für das Anzeigen mancher Informationen am Handsender ist eine Bildschirmanzeige (Display) von Vorteil.

Um eine hohe Reichweite zu garantieren von mehreren hundert Metern bis hin zu Kilometern ist die Anpassung einiger Parameter nötig. So sollten erstens effiziente Antennenstrukturen bei beiden Kommunikationsteilnehmern eingesetzt werden. Zweitens sollte die Empfindlichkeit beider Empfänger von typisch -100dBm auf ca. -120dBm verbessert werden. Bezüglich der Sendeleistung gilt festzuhalten, das diese so hoch wie möglich sein sollte, soweit dies die jeweiligen Homologierungsvorschriften bzw. die Homologisierung erlauben (siehe Tabelle 1). Beispielhaft sei erwähnt, das heutige RKE-Identifikationsgeber eine abgestrahlte Leistung von ca. -6dBm haben, bei Kommunikation über hohe Distanzen Sendeleistungen von +14dBm (beispielsweise im 868MHz ISM Band) erforderlich sind.

Der somit fahrzeugseitig vorhandene, hoch performante Transceiver eignet sich hervorragend auch für die Funkkommunikation zwischen den Fahrzeugen (C2C) oder für C2X-Kommunikation.

### Zweite Ausführungsbeispiele:

Mittels den bereits beschriebenen Verfahren und Systemen kann mittels der Funktechnik der drahtlose Zugangs- und Fahrtberechtigungseinheiten die Fahrzeug-zu-X Kommunikation (C2X) unterstützt bzw. erweitert werden.

Hierbei geht es darum, zusätzlich zu den vorgesehenen 5.9GHz (DSRC) eine Funkverbindung bei 433MHz bzw. 800 MHz bis 980 MHz aufzubauen (Fahrtberechtigungskommunikation), um deren bessere physikalische Eigenschaften zu nutzen.

Durch das nachfolgend beschriebene zweite Ausführungsbeispiel wird die Erfindung im Bereich der Priorisierung und der Congestion Control weiter verbessert.

Bisher wurde vorgeschlagen, zur Congestion Control bei der Fahrtberechtigungskommunikation CSMA zu verwenden. Dieses wird nun erweitert. Besteht im Umkreis um das Fahrzeug bereits eine Kommunikation über DSRC, so wird nicht mehr per Fahrtberechtigungskommunikation gesendet. Somit wird sichergestellt, dass in Bereichen mit größerer Fahrzeugdichte die niedrige Frequenz nicht überlastet wird und für andere Aufgaben frei ist.

Fahrzeuge die, z.B. durch Sicht-Hindernisse, an der Kommunikation über DSRC gehindert werden senden weiterhin über die Fahrtberechtigungskommunikation und warnen damit weiterhin die anderen Fahrzeuge, sie werden also nicht "unsichtbar". Stellen Fahrzeuge, die nur noch auf der DSRC Kommunikation senden, fest das es in der Nähe weitere Fahrzeuge gibt die nur über die Fahrberechtigungskommunikation senden, so wird die Kommunikation über die Fahrberechtigung mit einer geringen Wiederholrate (z.B. 0,25 Hz) reaktiviert, um das verdeckte Fahrzeug mit den notwendigsten Umgebungsinformationen zu versorgen.

Besteht die Kommunikation über DSRC und werden über die Fahrberechtigungskommunikation keine regulären Daten mehr gesendet, so kann der dann freie Kanal der Fahrtberechtigungskommunikation zur Priorisierung verwendet werden. Tritt ein Ereignis auf, dass große Priorität genießt (z.B. Rettungswagen, große Gefahr für Leib und Leben, etc.), so wird dies über die Fahrtberechtigungskommunikation signalisiert. Daraufhin wird die sonstige Kommunikation über DSRC eingestellt und der Sender der wichtigen Nachricht kann nun über DSRC Details versenden.

Empfängt eine Infrastruktureinheit Informationen sowohl auf der niedrigen Frequenz, als auch auf der hohen Frequenz, so ist davon auszugehen, dass nicht alle Teilnehmer untereinander kommunizieren können. In diesem Fall leitet die Infrastruktureinheit die Botschaften der hohen Frequenz weiter und fungiert damit als eine Art Relaisstation (und führt ein sogenanntes Multi-Hop der Botschaften aus). Durch dieses Vorgehen kann die Reichweite von Botschaften auf der hohen Frequenz erweitert werden, ohne dass diese dauerhaft per Multi-Hop weitergeleitet werden müssen, da Multi-Hop die Gefahr der Congestion mit sich bringt. Botschaften, die gerade erst Priorität über die niedrige Frequenz erhalten haben, werden auch per Multi-Hop weitergeleitet, damit deren Verbreitung auch auf der hohen Frequenz sichergestellt werden kann.

Es besteht auch die Möglichkeit, über die niedrige Frequenz eine Botschaft auf der hohen Frequenz anzufordern. Damit kann geprüft werden, ob eine Kommunikation auf der hohen Frequenz zustande kommen kann. Mit einer solchen Anfrage kann auch die Übertragung von Botschaften für eine besondere Situation gestartet werden. So könnte z.B. x Meter vor einer Kreuzung eine Anfrage auf der niedrigen Frequenz gesendet werden, damit die für die Kreuzung wichtigen Informationen im Folgenden auf der hohen Frequenz übermittelt werden.

Zur Verbesserung der Congestion Control ist auf den hohen Frequenzen eine Power Transmission Control angedacht. Damit wird sichergestellt, dass nur mit der notwendigen Sendeleistung gesendet wird und nicht durch eine zu hohe Sendeleistung das Frequenzband komplett blockiert wird. Eine Änderung der Sendeleistung auf der hohen Frequenz kann dabei z.B. auch durch Botschaften auf der niedrigen Frequenz getriggert werden (und vice versa). Damit kann z.B. verhindert werden, dass anfänglich mit einer zu hohen Sendeleistung gesendet wird, nur weil die hohe Frequenz kurzzeitig abgeschattet war.

Anstelle der Fahrtberechtigungskommunikation kann auch eine andere Kommunikation in einem niedrigen Frequenzband verwendet werden (wie z.B. 700 MHz in Japan). Jedoch kann die Fahrtberechtigungskommunikation auch zusätzlich zu diesem niedrigen Frequenzband verwendet werden. Hierbei bietet es sich z.B. an, über die Fahrtberechtigungskommunikation anzuzeigen, wenn ein Frequenzwechsel für die Kommunikation oder Teile der Kommunikation zwischen der hohen Frequenz und der niedrigen Frequenz stattfindet.

Sämtliche Verfahren sind auch in der Kombination 5.9 GHz und 700 MHz denkbar, ohne dass eine Fahrtberechtigungskommunikation verwendet wird. Der Vorteil der bereits vorhandenen Fahrtberechtigungskommunikation wird dabei jedoch verspielt.

Zur Verbesserung der Security können Algorithmen eingesetzt werden, die beide Frequenzen (Fahrtberechtigung und DSRC) gemeinsam einsetzen, um dadurch Abhören, etc. zu erschweren. Diese Security kann nicht nur für die C2X Kommunikation, sondern auch für die Fahrtberechtigung eingesetzt werden, um in beiden Fällen einen höheren Sicherheitsstandard zu gewährleisten.

Durch die Abschaltung der Fahrtberechtigungskommunikation, falls eine DSRC-Kommunikation möglich ist, wird der Funkkanal im niedrigen Frequenzbereich entlastet. Somit kann dieser dann als Signalisierung für wichtige Ereignisse verwendet werden, wodurch die Congestion Control und die Priorisierung der DSRC-Kommunikation verbessert wird.

Entscheidende Punkte der zweiten Ausführungsbeispiele sind:
- Kommunikation über niedrige Frequenz, falls keine Kommunikation über hohe Frequenz möglich ist.
- Einstellen der Kommunikation über die niedrige Frequenz, falls eine Kommunikation über die hohe Frequenz möglich ist.
- Zusätzliche Kommunikation über die niedrige Frequenz bei niedriger Wiederholrate, falls eine Botschaft über diesen Kanal empfangen wurde, die darauf schließen lässt, dass der Sender nicht über die hohe Frequenz kommunizieren kann.
- Signalisierung von wichtigen Ereignissen über niedrige Frequenz. Daraufhin Einstellung der sonstigen Kommunikation auf hoher Frequenz und dann Übermittlung der wichtigen Informationen auf hoher Frequenz.

### Dritte Ausführungsbeispiele:

Kabelgebundene Informationsübertragung nimmt immer mehr ab. Computer werden heute typischerweise per WLAN mit einem Netzwerk verbunden und Informationen/Emails/... kommen per Zellularfunk auf das Handy (z.B. Blackberry). Nur das Auto widersteht diesem Trend bisher in weitern Bereich. Vielen Informationen werden noch ausschließlich per Schild dem Fahrer mitgeteilt. Im besten Fall sind diese Schilder als Wechselschilder ausgeführt. Auch die Bezahlung von z.B. Parkhäusern funktioniert nur selten über Funk und wenn dann über proprietäre Lösungen, die zu einer Vielzahl von Kommunikationsboxen auf den Armaturenbrettern von Vielfahrern führen.

Gemäß dieser Ausführungsbeispiele werden als einzige drahtlose Kommunikationsform in drahtlose Zugangs- und Fahrtberechtigungseinheiten benutzt (Zündschlüssel), welche bei 433 MHz (ISM-Bänd), oder zwischen 800 und 980 MHz funken. Diese im Fahrzeug verbauten Einheiten können bis zu 1000m Reichweite erreichen (ohne Hindernisse) und werden aufgrund ihrer Wellenlänge sehr leicht um nahezu jedes Hindernis herum gebeugt. Leider handelt es sich bei den verwendeten Frequenzen nicht um geschützte Bereiche, so dass hier immer mit vermehrten Störungen gerechnet werden muss. Weiterhin ist auch nur einen begrenzte Bandbreite für die Datenübertragung verfügbar.

Trotz dieser Einschränkungen kann diese Technologie sehr gut zur Kommunikation zwischen Fahrzeug und Infrastruktur (C2I) eingesetzt werden. Beispiele für Anwendungen, die auch mit der niedrigen erzielbaren Datenrate auskommen sind im Folgenden dargestellt:
- Verkehrsschilder senden die aktuelle Geschwindigkeitsbeschränkung, etc. mittels Broadcast an alle Fahrzeuge in der Umgebung. Hierzu wird idealerweise nicht die mögliche Reichweite von 1000m ausgenutzt, sondern mit einer geringeren Leistung gesendet, damit nur Fahrzeug in der Nähe des Schildes die Information bekommen können und andere Fahrzeuge nicht irritiert werden. Zusätzlich können noch Informationen übertragen werden, für welche Richtung, Fahrspur, etc. die Information gilt. Dieses Verfahren ist vor allem für Wechselschilder sehr hilfreich.
- Eine Einfahrtsberechtigung auf z.B. Firmengelände wird nur erteilt, wenn sich das Fahrzeug mittels Fahrtberechtigungskommunikation authentifizieren kann. Geschieht das nicht, bleibt z.B. die Schranke unten. Hierzu kann sogar die gleiche Kommunikation wie für die Fahrberechtigung verwendet werden und es ist kein zusätzliches Protokoll notwendig, da die Aufgabenstellung für beide die gleiche ist. Der Unterschied ist nur, dass einmal der Schlüssel das Auto aufschließen will und im anderen Fall das Auto die Schranke.
- Die Bezahlung von z.B. Parkhäusern, Straßenmaut oder einer City-Maut kann ebenfalls über die Fahrtberechtigungskommunikation in Verbindung mit (u.U. mobilen) Barken erfolgen. Die bisher existierenden proprietären Lösungen können dadurch ersetzt werden.
- Bei Großveranstaltungen kann eine dynamische Routenführung zu z.B. Parkplätzen erfolgen. Hierzu werden die Informationen über die aktuell anzufahrenden Parkplätze per (mobilen) Barken über die Fahrtberechtigungskommunikation versendet. Diese Barken befinden sich nur an Stellen, an denen eine Änderung der Fahrtrichtung erfolgen kann/muss. Daher muss an diesen Stellen auch nur die einzuschlagende Richtung (geradeaus, rechts, links, 2. links, ...) und eine Kennung ("Großveranstaltung") übertragen werden, wodurch die notwendige Datenrate sehr gering ausfallen kann.

Für die meisten der dargestellten Anwendungsbeispiele eignet sich ein Broadcast, bei dem die Information von der Infrastruktur an alle Fahrzeuge im Umfeld gesendet wird. Nur wenn ein dediziertes Fahrzeug angesprochen werden soll (wie z.B. im Bezahlfall) wird ein Unicast verwendet. Der geringe erlaubte Duty Cycle stellt für die sehr undynamischen Informationen kein Problem dar.

Weitere Anwendungsfälle ergeben sich aus einschlägigen Listen der C2I Anwendungsfälle, wie sie z.B. im Car-to-Car Communication Consortium erstellt werden. Es sind vorteilhaft insbesondere diejenigen Anwendungsfälle umsetzbar, die eine geringe Datenrate benötigen.

Ein Vorteil der Verwendung der Fahrtberechtigungskommunikation liegt in der Wiederverwendung von bereits verbauten Komponenten. Durch die Unterschiedliche Aufgabenstellung (Öffnen des stehenden Fahrzeugs vs. Information für ein fahrendes Fahrzeug) ergibt sich auch kein Fall, in dem sich beide Anwendungen in die Quere kommen. Daher handelt es sich um eine echte Ergänzung der Funktionalität ohne Einschnitte bei der ursprünglichen Verwendung (Fahrtberechtigung) bei insgesamt als niedrig anzusehenden Zusatzkosten.

Die dargestellten Verfahren können alle auch mit anderen Kommunikationstechniken dargestellt werden. Bei der Verwendung der Fahrtberechtigungskommunikation für die angesprochenen Anwendungsfälle ergeben sich jedoch nur sehr geringe Zusatzkosten im Vergleich zu einer anderen technischen Lösung. Da sich beide Anwendungsgebiete (Öffnen des stehenden Fahrzeugs vs. Information für ein fahrendes Fahrzeug) nicht überschneiden, handelt es sich um eine echte Ergänzung der Funktionalität ohne Einschnitte bei der ursprünglichen Verwendung (Fahrtberechtigung) bei insgesamt als niedrig anzusehenden Zusatzkosten.

Entscheidende Punkte der dritten Ausführungsbeispiele sind die Verwendung der bereits im Fahrzeug verbauten Fahrtberechtigungskommunikation zur Fahrzeug-zu-Infrastruktur Kommunikation.

### Vierte Ausführungsbeispiele:

Unfälle mit Fußgängern im Straßenverkehr ereignen sich oft in unübersichtlichen Situationen oder weil der Fahrer des Kraftfahrzeugs den Fußgänger schlicht übersehen hat. Daher werden zur Zeit intensiv Verfahren zur Fußgängererkennung mittels Videosensorik entwickelt. Diese haben jedoch prinzipiell das gleiche Problem wie der Fahrer, dass sie nur Fußgänger erkennen können, die vom Fahrzeug aus optisch sichtbar sind.

Hier setzen die vierten Ausführungsbeispiele an. Viele moderne Fahrzeuge sind mit einer "Remote Keyless Entry" Funktion ausgestattet, also mit einem Funkschlüssel. Moderne Versionen dieser Funkschlüssel haben eine Reichweite von 100 m und mehr. Viele Fußgänger besitzen Fahrzeuge und haben daher auch einen Funkschlüssel bei sich.

Dies wird im Folgenden verwendet, um diese Fußgänger zu erkennen. Hierzu sendet die Fahrtberechtigungseinheit im Fahrzeug während der Fahrt in kurzen Abständen einen "Suchbefehl" aus. Empfängt ein Schlüssel einen solchen Suchbefehl und befindet sich der Schlüssel nicht innerhalb eines Fahrzeugs, so antwortet er mit einer kurzen Bestätigung. Diese Bestätigung wird nun vom Fahrzeug empfangen und der Fahrer kann gewarnt werden. Zur Warnung bieten sich mehrere Strategien an:
- Über die Geschwindigkeit:
   a. Befindet sich das Fahrzeug in einem niedrigen Geschwindigkeitsbereich und ist davon auszugehen, dass sowieso mit Fußgängern zu rechnen ist, wird nur angezeigt, dass sich Fußgänger in der Nähe befinden, jedoch keine Explizite Warnung ausgegeben.
   b. Ist die Geschwindigkeit höher und eigentlich nicht damit zu rechnen, dass sich Fußgänger in der Nähe aufhalten, wird eine Warnung ausgegeben.
- Über Informationen aus einer digitalen Karte:
   a. Befindet sich das Fahrzeug in einer Gegend oder auf einer Straßenklasse, wo mit Fußgängern zu rechnen ist, so wird nur angezeigt, dass sich Fußgänger in der Nähe befinden, jedoch keine Explizite Warnung ausgegeben.
   b. Befindet sich das Fahrzeug in einer Gegend oder auf einer Straßenklasse, wo eigentlich nicht mit Fußgängern zu rechnen ist, wird eine Warnung ausgegeben.

Unter Umständen ist es sinnvoll, nur dort Suchbefehle auszusenden, wo nicht mit Fußgängern zu rechnen ist.

Um einzelne Schlüssel bei mehreren aufeinanderfolgenden Suchbefehlen erkennen zu können, verwenden diese die gleiche Kennung für Anfragen von einem Fahrzeug. Diese Kennung wird in vorgegebenen Abständen (z.B. 10 Minuten) zufällig neu gewählt und ist zudem bei jedem anfragenden Fahrzeug anders. Somit kann der Datenschutz eingehalten werden und trotzdem kurzzeitig ein eindeutige Zuordnung erreicht werden.

Als weitere Funktion kann das Aussenden von Bestätigungen um eine "Communityfunktion" erweitert werden. Hierzu gibt ein Besitzer eines Schlüssels frei, dass der Schlüssel zusätzlich ausgeben darf, dass er zu einer Community gehört. Dem Fahrer eines Fahrzeugs kann dann angezeigt werden, dass sich andere Mitglieder seiner Community in der Nähe aufhalten. Solche Communities könnten z.B. an Fahrzeugmarken (z.B. Mini, Vw Golf, ...) gebunden sein, oder an Herkunftsländer, ...

Um ein abgestelltes Fahrzeug einfach wiederfinden zu können werden im Moment Funkschlüssel mit einer sogenannten "Auto-finder Funktion" entwickelt. Hierzu werden die Funkschlüssel mit GPS Modulen ausgerüstet. Die Information dieser GPS Module lässt sich für die Fußgänger Warnung sehr vorteilhaft nutzen, da hiermit eine genaue Lokalisierung der Fußgänger möglich ist wodurch unnötige Warnungen vermieden werden.

Um besonders für Kinder einen verbesserten Schutz zu ermöglichen können einfache Transponder gebaut werden, die nur die Fußgänger Warnfunktion bearbeiten ohne dass sie als Funkschlüssel funktionieren. Durch eine besondere Rückantwort dieser Kinder-Transponder kann die Warnstrategie im Fahrzeug beeinflusst werden, um dem eventuell "unvorhersehbaren" Verhalten von Kindern gerecht zu werden. Ähnliches ist für Tiere möglich.

Durch die Verwendung von bereits vorhandenen Techniken (Fahrtberechtigung) ist eine preisgünstige Fußgängererkennung möglich. Zusätzlich bietet Funk der Vorteil, dass auch Fußgänger erkannt werden können, die optisch nicht sichtbar sind und damit durch Umfeldsensoren nicht erkannt werden können. Selbst wenn nicht all Fußgänger durch diese Technik erkannt werden können, so bietet sie doch eine preiswerte Möglichkeit, zusätzliche Erkennungsvarianten in einem Fahrzeug zu realisieren.

Entscheidende Punkte der vierten Ausführungsbeispiele sind:
- Aussendung von Suchbefehlen durch die Fahrtberechtigungseinheit im Fahrzeug, wenn sich das Fahrzeug fortbewegt. Evtl. Aussendung nur dann, wenn aufgrund der Geschwindigkeit und/oder Karteninformation nicht mit Fußgängern zu rechnen ist.
- Aussendung einer Bestätigung von Fahrtberechtigungsschlüsseln, die sich außerhalb eines Fahrzeugs befinden, falls sie einen Suchbefehl empfangen.
- Warnung an den Fahrer, falls aufgrund von Karteninformation und/oder Geschwindigkeit nicht mit.Fußgängern zu rechnen ist. Sonst nur Information an den Fahrer.
- Zusätzliche Community-Information, falls vom Besitzer des Schlüssel freigegeben.
- Verwendung von GPS-Information aus dem Schlüssel (falls vorhanden).
- Ausführungen ohne Funkschlüsselfunktion zur Erkennung von Kindern bzw. Tieren.

### Fünfte Ausführungsbeispiele:

Fahrzeug-zu-X Kommunikation kann auf Basis von IEEE 802.11p erfolgen. Diese beruht auf einer Frequenz von 5.9 GHz.

Es kann ein dedizierter Kontrollkanal verwendet werden (sogenanntes dual-receiver Konzept), oder es kann der Kontrollkanal über ein mittels GPS synchronisiertes Zeitraster in den Kommunikationskanal eingeflochten werden (sogenanntes single-receiver Konzept). Der Vorteil des besseren Zeitverhaltens und der größeren Sicherheit des dual-receiver Konzepts stehen die geringeren Kosten des single-receiver Konzepts gegenüber. Ein Problem für das dual-receiver Konzept ist auch die vergleichsweise geringe Gesamtbandbreite von C2X, die in Europa u.U. nur 30 MHz in Summe für alle Kanäle beträgt.

Gemäß den fünften Ausführungsbeispielen ist über zusätzliche Kommunikationstechniken (z.B. WLAN 802.11a/b/g/n oder den Funkschlüssel) ebenfalls eine Kommunikation zwischen Fahrzeugen (und Infrastruktur) möglich. Diese Techniken haben jedoch den Nachteil, dass die verwendeten Frequenzen nicht geschützt sind und damit durch andere Anwendungen gestört sein können.

Dennoch bietet es sich an, bei einem 2-Kanal-Ansatz einen der beiden Kanäle über 802.11p und den anderen über die zusätzliche Kommunikationstechnik abzuwickeln. Stehen mehrere zusätzliche Kommunikationstechniken zur Verfügung, können diese parallel verwendet werden, um die Robustheit der Übertragung gegenüber Störungen durch andere Anwendungen auf dem gleichen Frequenzband zu verbessern. Wesentliche Vorteile der zweiten (üblicherweise deutlich niedrigeren Frequenz) sind die geringere Freiraumdämpfung, also höhere Reichweite bei gleicher Sendeleistung, und die Eigenschaft das niedrigere Frequenzen besser um Sichthindernisse herum gebeugt werden. Der Nachteil besteht in einer niedrigeren zur Verfügung stehenden Bandbreite. Zusätzlich verringern die unterschiedlichen genutzten Technologien die Wahrscheinlichkeit, dass sowohl 11p wie der zweite Kanal gleichzeitig gestört werden oder durch Implementierungsfehler gleichzeitig ausfallen.

Es ist auch möglich, 802.11p in der single-receiver Konfiguration zu benutzen und über die zusätzliche Kommunikationstechnik eine dual-receiver Konfiguration parallel dazu aufzubauen. So wird über die geschützt Frequenz von 802.11p die Funktionalität auf jeden Fall sichergestellt und über die zusätzliche Frequenz die Performance (Zeitverhalten, Priorisierung, Congestion Control, ...) verbessert.

Durch die parallele Verwendung von 802.11p bei 5.9 GHz und einer zusätzliche Kommunikationstechnik wird eine Redundanz für Sicherheitsanwendungen ermöglicht, die vor allem durch die unterschiedlichen physikalischen Ausbreitungseigenschaften der verwendeten Frequenzen von Vorteil ist. So kann insgesamt auch die Abdeckung verbessert werden und damit die Sicherheit des Gesamtsystems verbessert werden.

Durch die Verwendung von mehreren Kommunikationstechniken und Frequenzen für die verschiedenen Kanäle der C2X Kommunikation wird eine Redundanz erzielt. Zusätzlich erhöht sich die Übertragungssicherheit, da Störungen einer Frequenz durch die anderen Frequenzen ausgeglichen werden können.

Entscheidende Merkmale dieser fünften Ausführungsbeispiele sind:
- Verwendung von 802.11p bei 5.9 GHz als Basis für C2X (evtl. in single-receiver Konfiguration).
- Verwendung einer zweiten (oder mehrerer) zusätzliche Kommunikationstechniken als z.B. Servicekanal für die C2X Kommunikation.

### Sechste Ausführungsbeispiele:

Moderne Fahrerassistenzsysteme und Fahrsicherheitssysteme beruhen typischerweise auf leistungsfähigen und damit teuren Umfeldsensoren. Eine Ausnahme stellt der Closing Velocity Sensor (CV-Sensor) der Firma Continental dar. Dieser Sensor ist ein sehr preiswerter Sensor, der vor allem für Anwendungen im niedrigen Geschwindigkeitsbereich (City Safety) verwendet wird. Durch seine preiswerte Bauart kann er jedoch nur sehr wenige und sehr grobe Informationen über das Umfeld liefern.

Hier setzen die sechsten Ausführungsbeispiele an. In vielen modernen Autos sind sogenannte Remote Keyless Entry (RKE) Systeme verbaut. Diese Systeme dienen der Zugangskontrolle zum Fahrzeug und verwenden hierzu eine Funkverbindung zwischen Fahrzeug und Zugangsschlüssel. Diese Funkverbindung wird nun verwendet, um weitere Daten zwischen zwei Fahrzeugen auszutauschen, wenn mittels CV-Sensor eine Gefahr erkannt wurde. Hierzu sendet das mit dem CV-Sensor ausgestattete Fahrzeug mittels RKE eine Botschaft aus. Bekommt ein Fahrzeug diese Botschaft, so sendet es hilfreiche Informationen zurück. Diese Informationen können z.B. sein:
- Masse des Fahrzeugs;
- Breite und Länge des Fahrzeugs, evtl. auch Höhe;
- Dem Fahrzeug mit CV Sensor zugewandte Seite des Fahrzeugs (Front, Heck, Links, Rechts);
- Fahrzeugtyp (PKW, NKW, Bus, Anhänger, etc.);
- Stoßstangenhöhe;
- Knautschverhalten des Fahrzeugs (ob z.B. Knautschzone vorhanden oder nicht, etc.);
- Position relativ zur Spurmarkierung (falls Spurerkennung in Fahrzeug verbaut ist);
- Lenkverhalten des Fahrzeugs;
- Geschwindigkeit und Beschleunigung des Fahrzeugs.

Mit diesen zusätzlichen Informationen kann dann eine verbesserte Situationsinterpretation durchgeführt werden und darauf aufbauend z.B. eine Kollisionsvermeidung erzielt werden. Kann die Kollision nicht vermieden werden, so können die InCrash Maßnahmen besser an die Situation angepasst werden. So können z.B. die Airbagzündungen entsprechend des erwarteten Aufschlags (ermittelt aus den beiden Massen der Fahrzeuge und der relativen Geschwindigkeit) angepasst werden.

Einige Beispiel für Möglichkeiten zur Verbesserung der Situationsinterpretation sind im Folgenden dargestellt:
- Über die Breite des Fahrzeugs kann besser abgeschätzt werden, ob ein Ausweichen noch möglich ist. Falls eine Position relativ zur Fahrspur mitgeschickt wird, so kann diese Abschätzung sogar weiter verbessert werden.
- Über das Lenkverhalten des Vorderfahrzeugs kann abgeschätzt werden, ob ein Ausweichen bzw. Überholen in einer Richtung nicht zu einer Kollision mit der Seite des Vorderfahrzeugs führen würde.
- Über den Fahrzeugtyp kann abgeschätzt werden, mit welchen Reaktionen des Vorderfahrzeugs zu rechnen ist. Vor allem bei Anhängern, Gespannen und Bussen hilft dies, die Situation besser abschätzen zu können.
- Über die dem Fahrzeug zugewandte Seite des Vorderfahrzeugs kann besser abgeschätzt werden, ob ein Ausweichen möglich ist. Vor allem bei sehr langen Fahrzeugen ist dies wichtig.

Zur Verbesserung der InCrash Maßnahmen helfen beispielsweise die im Folgenden dargestellten Ausführungsbeipiele:
- Über die Masse kann die Kollisionsschwere und auch der Verlauf der Kollision abgeschätzt werden.
- Über die Breite des Vorderfahrzeugs und die Position relativ zur Fahrspur kann abgeschätzt werden, wie stark sich die Fahrzeuge überlappen und damit, ob ein Schleudern durch den Aufprall droht.
- Über die Stoßstangenhöhe kann die Crash-Kompatibilität abgeschätzt werden.
- Über das Knautschverhalten kann abgeschätzt werden, wie sich das eigene Fahrzeug abbremsen wird und damit, wie die Airbags zu zünden sind.
- Über den Fahrzeugtyp kann abgeschätzt werden, wo überall mit Treffern zu rechnen ist. So ist z.B. durch Sportwagen weniger mit Treffern auf Höhe der Windschutzscheibe zu erwarten, wohingegen LKWs eine Gefahr für das gesamte Fahrzeug darstellen.

Gegebenenfalls kann sogar eine Klassifizierung der Fahrzeuge durchgeführt werden, wobei eine Klasse jeweils Fahrzeuge mit ähnlichem Verhalten beinhaltet, z.B. bezüglich Knautschverhalten, Fahrzeugtyp, Stoßstangenhöhe, etc. Dann müsste nur noch die Fahrzeugklasse übertragen werden, der Rest wäre in einer Datenbank im empfangenden Fahrzeug hinterlegt.

Zur Erkennung, welches Fahrzeug die Daten senden soll, ist es notwendig, eine Zuordnung relativ zum anfragenden Fahrzeug zu ermöglichen. Hierzu kann einerseits eine Lokalisierung auf Basis von multiplen Antennen durch das RKE Modul durchgeführt werden. Eine andere Möglichkeit besteht über den Austausch von zusätzlichen Daten über das anfragende (mit dem CV Sensor ausgerüstete) Fahrzeug. Sendet dieses Fahrzeuge seine Ausrichtung (ermittelt über GPS oder einen elektronischen Kompass), die Blickrichtung des Sensors (nach vorne, nach hinten, nach links, nach rechts, ...) und die Relativgeschwindigkeit (lateral und longitudinal, evtl. sogar nur das Vorzeichen der Geschwindigkeit) mit, so können die empfangenden Fahrzeug im Umfeld über einen Vergleich mit ihrer Ausrichtung und ihrer Geschwindigkeit erkennen, ob sie gemeint sind oder nicht.

Anstelle der RKE Kommunikation kann auch Fahrzeug-zu-Fahrzeug (C2C) Kommunikation verwendet werden. Im Idealfall werden beide Technologien verwendet, um sicherzustellen, dass die Information auch auf jeden Fall ankommt.

Anstelle des CV Sensors kann auch ein anderer Umfeldsensor verwendet werden. Der Kostenvorteil ist jedoch vor allem dann gegeben, wenn der Umfeldsensor möglichst preiswert ist. Wird der Umfeldsensor jedoch schon für andere Funktionen mitverwendet, wie z.B. ACC, so macht die Kombination mit RKE ebenfalls Sinn, da keine zusätzliche Hardware verbaut werden muss.

Zur Verschlüsselung und damit auch Authentifizierung bieten sich hier AES, TEA (Tiny Encryption Algorithm) oder HiTag an, da diese auch heute schon bei RKE zum Einsatz kommen. Vor allem AES und TEA sind hier von Vorteil, da dies OpenSource Verschlüsselungsalgorithmen sind und somit vielfach geprüft worden sind.

Die Kommunikationsverbindung kann vorzugsweise als ad-hoc Netzwerk erfolgen wie z.B. bei IEEE 802.15.4 (ZigBee) oder IEEE 802.11 (WLAN).

Möglich sind auch Peer-to-Peer Verbindungen, wie das bei heutigen RKE-Systemen der Fall ist, oder Broadcast-Verbindungen, abhängig davon, welche Informationen übertragen werden und welche Funkteilnehmer diese Informationen erhalten sollen.

Durch die Verwendung des RKS-Moduls entstehen kaum zusätzliche Kosten, da dieses Modul bereits im Auto verbaut ist. Somit kann eine Verbesserung der Funktion erzielt werden, ohne den Preis für den Kunden erhöhen zu müssen. Der CV-Sensor ist ebenfalls ein sehr preiswerter Sensor und durch die Kombination beider Techniken kann ein sehr preiswertes und doch sehr leistungsfähiges CitySafety Paket geschnürt werden.

Entscheidende Merkmale dieser sechsten Ausführungsbeispiele sind:
- Erkennung einer gefährlichen Situation durch einen (preiswerten) Umfeldsensor, wie z.B. CV Sensor;
- Daraufhin Anfrage von zusätzlichen Daten mittels RKE;
- Verwendung der zusätzlichen Daten zur Situationsinterpretation und/oder Anpassung von InCrash Maßnahmen, wie z.B. Airbagzündung;
- Erkennung, ob die Anfrage für ein 2. Fahrzeug relevant ist, über multiple Antennen bei RKE oder Ausrichtung bzw. GPS/Kompassdaten, Sensorblickrichtung und Relativgeschwindigkeit;
- Optional: Klassifikation von Fahrzeugen inkl. Hinterlegung der relevanten Parameter der Klassen in einer Datenbank im Fahrzeug und deswegen nur Austausch der Klassen-ID.

### Siebte Ausführungsbeispiele:

Warnung vor Personen basierend auf der Technik der drahtlosen Fahrberechtigung.

Die Warnung vor Fußgänger ist ein wichtiges Gebiet im Bereich Fahrzeugsicherheit. Heute basiert diese Warnung vor allem auf Umfeldsensorik, die Fußgänger erkennt, ohne dass diese besondere Ausrüstung brauchen. Eine andere Möglichkeit ist entsprechend ausgerüstete Infrastruktur, die Fußgänger erkennt und diese Information dann an die Fahrzeuge weiterreicht.

Einen Zwischenweg stellen die siebten Ausführungsbeispiele dar. Fast jedes Fahrzeug ist heute mit einer drahtlosen Fahrberechtigung ausgestattet. Transponder für diese Technik werden nun in Alltagsgegenständen für Fußgänger verbaut, wie z.B. Fahrradhelmen, (Regen-)Jacken, oder auch in speziellen Umhängern für z.B. Kinder oder alte Personen. Fahrzeuge senden nun in zyklischen Abständen ein Signal aus. Die Transponder reagieren darauf mit einer Antwort und durch diese Antwort kann das Fahrzeug erkennen, dass sich ein Fußgänger in der Nähe befindet. Sämtliche weiteren Ausführungen der vierten Ausführungsbeispiele gelten auch hier.

Durch die Verwendung von Transpondern für die drahtlose Fahrberechtigung ist im Fahrzeuge keine zusätzliche Kommunikationstechnologie notwendig und somit eine entsprechende Ausrüstungsrate auf der Fahrzeugseite deutlich schneller erzielbar, als mit einer neuen Kommunikationstechnik. Es entstehen außerdem keine Kosten für Infrastruktur, was bei aktuellen klammen öffentlichen Kassen ebenfalls von Vorteil ist.

Durch die Verwendung der Technik der drahtlosen Fahrberechtigung kann auch vor Personen gewarnt werden, die von den Umfeldsensoren nicht "gesehen" werden können, weil sie z.B. von parkenden Fahrzeugen verdeckt sind.

Idealerweise wird als zyklisches Signal ein Signal verwendet, dass über alle Fahrzeughersteller gleich ist und nicht an den Verschlüsselungsalgorithmus der drahtlosen Fahrberechtigung gekoppelt ist. So wird auch vermieden, dass durch abhören des zyklischen Signals die Fahrberechtigung geknackt werden kann.

Die relativ geringe Reichweite (∼ 5-20m) der Transponder ist hier von Vorteil, da somit vermieden wird, dass in Städten zu viele Warnungen empfangen werden und dadurch keine sinnvolle Warnung mehr stattfinden kann.

In Ausrüstungsgegenständen mit größerer räumlicher Ausdehnung können u.U. zwei Antennen verbaut werden, um eine Ortung des zyklischen Signals zu erlauben und nur dann eine Antwort zu senden, wenn sich die Person nicht vom Fahrzeug wegbewegt. Wird ein gewisser Mindestabstand zwischen Fahrzeug und Ausrüstungsgegenstand unterschritten, wird auf jeden Fall eine Antwort versendet, um auch bei plötzlichen Richtungsänderungen der Person vorbereitet zu sein.

Der Transponder sollte immer mit Energie versorgt sein, da ansonsten nicht die Reichweiten erzielt werden können, die für die Fußgängerwarnung notwendig sind. Daher bietet es sich an, wenn der Grad der Energieversorgung (z.B. Ladezustand der Batterie) von außen ersichtlich angezeigt wird.

### 1. Beispiel:

Ein Kind hat einen Umhänger, der auf Signale aus der drahtlosen Fahrberechtigung mit einer Antwort reagiert. Dieses Kind spielt am Wegesrand und ist durch die parkenden Autos verdeckt. Trotzdem erhalten Fahrer im Fahrzeug eine Warnung, da die Antwort des Umhängers auch ohne Sichtverbindung zwischen Kind und Fahrzeug an das Fahrzeug übermittelt werden kann.

### 2. Beispiel:

Bei einem Fahrradhelm sind vorne und hinten Antennen verbaut. Es wird das zyklische Signal eines Fahrzeugs erkannt, jedoch wird erkannt, dass das Fahrzeug die Bahn des Fahrradfahrers nur hinter diesem kreuzen wird. Daher wird keine Antwort versendet. In einem 2. Fall wird erkannt, dass sich das Fahrzeug von hinten nähert. Hier wird eine Antwort versendet, da das Fahrzeug den Fahrradfahrer mit großer Wahrscheinlichkeit überholen wird.

### Achte Ausführungsbeispiele:

Initiierung einer Datenverbindung über Car-to-X Kommunikation, Abwicklung über eine andere Kommunikationstechnik.

C2X ermöglicht eine direkte Zuordnung von einer Botschaft zu einem Fahrzeug. Jedoch ist die verwendete Technik typischerweise nicht auf große Datenraten ausgelegt, sondern auf den möglichst schnellen und häufigen Austausch von wenigen Daten zwischen vielen Teilnehmern. Soll nun eine große Datenmenge zwischen zwei dedizierten Teilnehmern ausgetauscht werden, so ist C2X auf Basis von 802.11p hierfür nicht ausgelegt.

Hier setzen die achten Ausführungsbeispiele an. Die Auswahl des Kommunikationspartners bzw. der Kommunikationspartner erfolgt über C2X, als z.B. 802.11p. Anschließend wird über diesen Kanal zwischen den beiden oder mehr Teilnehmern ausgehandelt, auf welchem Kommunikationskanal die weitere Kommunikation durchgeführt wird und es werden die entsprechenden (Kommunikations-)Adresse oder Telefonnummern ausgetauscht. Dies erfolgt verschlüsselt, wie z.B. bei einer SSL Verbindung. Anschließend wird die weitere Kommunikation auf dem eben ausgehandelten Kommunikationsmedium initiiert und durchgeführt.

Als Kommunikationstechnologien bieten sich beispielsweise WLAN (802.11 a/b/g/n), Mobilfunk (GSM, GPRS, UMTS, LTE), WiMax, Bluetooth, etc. an. Vor allem WLAN ist vorteilhaft, da u.U. die gleiche Hardware für C2X und die WLAN-Verbindung verwendet werden kann. Speziell die Ausführung über WLAN stellt eine Erweiterung des im IEEE 802.11p bzw. IEEE 1609.4 Standard dargestellten Verfahrens dar, bei dem zwischen einem Kontrollkanal und verschiedenen Service Kanälen umgeschaltet wird. Um die wichtigen Informationen des Kontrollkanals zu empfangen muss jeder Empfänger alle 50ms für 50ms auf den Kontrollkanal schalten, eine ähnliche Technik wäre auch für die oben beschriebene Nutzung von WLAN nach 802.11a/b/g/n hilfreich wenn die gleiche Hardware für 11p und die anderen WLAN Standards genutzt wird.

Es bietet sich jedoch auch an, Botschaften anstelle über den Service Kanal zu schicken über die oben beschriebene Technik auf einem anderen Kommunikationsweg auszutauschen.

Ein weitere Vorteil dieser Technik ist, das hiermit auch in Europa eine effektive Bandbreite für Service Kanäle zur Verfügung gestellt werden kann, wie sie in den USA alleine durch das für 802.11p reservierte Frequenzband bereitgestellt ist. Hierdurch können Applikationen unabhängig vom Einsatzgebiet entwickelt und genutzt werden.

### Beschreibung von achten Ausführungsbeispielen:

Der Fahrer eines Fahrzeugs sieht auf seinem Bildschirm eine Karte der Umgebung und sämtliche Fahrzeuge, die mit ihm per C2X in Verbindung stehen. Der Bildschirm ist dabei als Touchscreen ausgeführt. Der Fahrer wählt nun ein Fahrzeug mittels Touchscreen aus und initiiert so die Verbindung mit dem anderen Fahrzeug. Dieses andere Fahrzeug bekommt eine Mitteilung über den Wunsch der Kommunikation. Wird dieser Wunsch angenommen, so wird die Kommunikationstechnik ausgehandelt. Das kann automatisch erfolgen, z.B. auf Basis von vorausgewählten Technologien (so kann der Fahrer z.B. Mobilfunk ausschließen) oder manuell mittels einer Liste an Möglichkeiten, die die beteiligten dann bestätigen müssen. Anschließend erfolgt die Kommunikation zwischen den Teilnehmern auf diesem Kommunikationskanal.

Die Anwahl kann auch per Spracherkennung, z.B. über das Nummernschild des anderen Fahrzeugs erfolgen, oder automatisch über eine Community, etc.

### Neunte Ausführungsbeispiele:

Freigeben einer Kommunikationsverbindung über die drahtlose Fahrberechtigung.

Wird heute eine Kommunikationsverbindung zwischen einem Fahrzeug und einem weiteren Gerät oder Fahrzeug oder der Infrastruktur aufgebaut, so werden nur die Sicherheitsmechanismen der jeweiligen Kommunikationstechnik verwendet.

Hier setzen die neunten Ausführungsbeispiele an. Der Aufbau einer Kommunikationsverbindung nach außen bzw. die Annahme einer Kommunikationsverbindung wird über die drahtlose Fahrberechtigung freigegeben. Bevor diese Freigabe nicht erfolgt, ist die Kommunikationsmöglichkeit des Fahrzeugs von außen nicht erkennbar, da die Systeme abgeschaltet sind. Dadurch kann auch das Energiemanagement verbessert werden.

Die Aktivierung einer Kommunikationstechnik per drahtloser Fahrberechtigung gibt dem Fahrer die Kontrolle über die Kommunikation und verbessert zusätzlich die Sicherheit (Security) des Systems. Ein Beispiel hierfür ist WLAN aufgrund der sehr großen Verbreitung und damit großen Gefahr von Angriffen. Eine andere Möglichkeit ist der Schutz der Privatsphäre, da nur dann Daten übertragen werden können, wenn der Fahrer per drahtloser Fahrberechtigung zustimmt. Zusätzlich kann über die drahtlose Fahrberechtigung eine Kostenkontrolle stattfinden, falls die Kommunikation mit Kosten behaftet ist, wie z.B. Mobilfunk.

Wird WLAN parallel als Consumer WLAN und für C2X verwendet, kann das Umschalten zwischen diesen Modi ebenfalls über die drahtlose Fahrberechtigung erfolgen.

Ist die Reichweite der drahtlosen Fahrberechtigung zu klein, kann auch eine Kommunikationstechnik mit größerer Reichweite verwendet werden. So besteht auch die Möglichkeit, dass z.B. zur Verbesserung der Reichweite, die Fahrzeugberechtigungsdaten von dem Rechner der relevanten Kommunikationsverbindung ausgelesen werden und für die Eröffnung der Kommunikationsverbindung zum Auto mit übertragen werden. So erweitert sich die Reichweite der drahtlosen Fahrberechtigung auf die Reichweite des Kommunikationstechnik (z.B. WLAN hotspot oder Mobilfunk über GSM, GPRS, UMTS, LTE, etc.).

### Beispiel: Drahtlose OBD:

Heute wird die OBD-Schnittstelle per Kabel ausgelesen. Dies kann auch über drahtlose Schnittstellen erfolgen, z.B. WLAN. Es ist jedoch nicht gewünscht, dass diese Daten von jeder Person auslesbar sind. Daher muss, bevor die Schnittstelle ausgelesen werden kann, diese Funktion per drahtloser Fahrberechtigung freigegeben werden, z.B. über eine dedizierte Taste auf dem Schlüssel. Erst nach dieser Freigabe wird die WLAN-Schnittstelle aktiviert und die OBD-Daten können ausgelesen werden. Wird WLAN bereits für andere Zwecke verwendet (z.B. Musikdownload), so wird der Zugang zu den OBD-Daten über WLAN freigegeben. Die Freigabe erlischt nach einer definierten Zeit. Innerhalb dieser Zeit muss die Abfrage der Daten starten. Vor der Freigabe besteht keine Möglichkeit auf die OBD-Daten per WLAN zuzugreifen.

### Beispiel: WLAN für Musikdownload von zuhause:

Der Download von Musikdaten von Heimrechnern in das Fahrzeug wird vielfach diskutiert. Ein Problem stellt der Zugang zum Fahrzeug dar, wenn dieses eigentlich abgestellt ist. Wird WLAN die ganze Zeit aktive gehalten, ist das Energiemanagement ein Problem. Die drahtlose Fahrberechtigung muss jedoch sowieso zu jeder Zeit erreichbar sein. Daher bietet es sich an, WLAN über die drahtlose Fahrberechtigung zu aktivieren und ansonsten von der Energieversorgung zu trennen. Der Nutzer kann dann von zuhause das WLAN im Fahrzeug per drahtloser Fahrberechtigung aktivieren und dann seine Daten auf das Fahrzeug übertragen bzw. von diesem herunterladen.

### Zehnte Ausführungsbeispiele:

Warnung des umliegenden Verkehrs nach einem Unfall mittels drahtloser Fahrberechtigung.

Heutige Systeme zur Unfallvermeidung untersuchen das Umfeld, erkennen einen drohenden Unfall und versuchen, diesen zu vermeiden, indem automatisch gebremst wird. Geschieht der Unfall dennoch, so wird ein automatischer Notruf (Ecall) abgesendet. Mit diesen Systemen sind somit viele Informationen im Fahrzeug verfügbar, die auch für andere Fahrzeuge hilfreich wären, jedoch werden die Informationen nicht weitergegeben.

Da moderne Fahrzeug größtenteils mit drahtlosen Fahrberechtigungen ausgestattet sind, bietet es sich an, über diese Einheiten Informationen über Unfälle an andere Fahrzeuge zu versenden. Somit kann noch vor dem markieren einer Unfallstelle mit einem Warndreieck der Verkehr gewarnt werden und damit auch die Sicherheit an der Unfallstelle verbessert werden.

Idealerweise wird die Warnung so übertragen, dass es egal ist, nach welchem Verfahren die normale Fahrberechtigung abgewickelt wird, d.h. dass es einfach möglich ist, Herstellerübergreifend Warnungen auszutauschen und zu verstehen. Im Idealfall ist diese Lösung sogar nachrüstbar.

Zusätzlich oder anstelle der Kommunikation über die Fahrberechtigung kann auch eine Fahrzeug-zu-X Kommunikation über z.B. WLAN (IEEE 802.11a/b/g/n/p), zellularen Funk (GSM, GPRS, EDGE, UMTS, LTE), WiMax, Bluetooth, etc. erfolgen.

Die zehnten Ausführungsbeispiele verwenden nur schon im Fahrzeug verfügbare Geräte und Einheiten, um die Fahrzeugsicherheit zu erhöhen. Die drahtlose Fahrberechtigung wird normalerweise auch in einem Frequenzband abgewickelt, das gute physikalische Ausbreitungseigenschaften hat, weshalb Warnungen auch bei unübersichtlichen Straßenverläufen den nachfolgenden Verkehr erreichen können. Die notwendigen Daten sind zudem so gering, dass die niedrige Datenrate der Fahrberechtigungskommunikation keine Probleme darstellt.

Wird ein automatisierter Notruf ausgesendet (z.B. Aufgrund einer Airbagauslösung oder aufgrund einer manuellen Auslösung), so wird eine Warnung mittels der Fahrberechtigungskommunikation ausgesendet. Diese Warnung wird als Broadcast versendet, damit alle Fahrzeuge in der Kommunikationsreichweite die Warnung erhalten. Hierbei bietet es sich an, Botschaften aus der Fahrzeug-zu-X Kommunikation zu verwenden, da diese schon Standardisiert sind oder sich in der Standardisierung befinden (siehe z.B. SAE J2735, Car2Car-Communication Consortium, etc.). Mit diesen Botschaften ist es auch möglich, den genauen Ort des Unfalls zu versenden und damit eine genauere Warnung in den empfangenden Fahrzeugen darzustellen. Dazu ist jedoch eine Standardisierung der Kommunikation mittels Fahrberechtigung als Ganzes notwendig.

Eine andere Möglichkeit ist, ein definiertes Bitmuster in einer definierten physikalischen Codierung zyklisch als Warnung zu versenden (ähnlich SOS mittels Morsen). Dadurch muss nur dieses Bitmuster standardisiert werden und die sonstige Ausgestaltung der der Kommunikation für z.B. die Fahrberechtigung ist davon nicht betroffen. Jedoch entfällt bei dieser Methode die Möglichkeit der genauen Ortsübermittlung.

Weitere Gründe für die Versendung der Warnung können automatische Bremsungen aufgrund von Collision Mitigation Systemen oder automatischen Notbremssystemen oder Bremsassistenten sein. Es bietet sich an, dazu eine Stufung der Warnung einzuführen, wobei ein wirklich stattgefundener Unfall die größte Warnstufe bekommt, die Vermeidung des Unfalls eine etwas geringere Warnstufe.

Parallel zu oder anstelle der Fahrberechtigungskommunikation kann auch Fahrzeug-zu-X Kommunikation o.a. verwendet werden.

### Elfte Ausführungsbeispiele:

Fahrzeug-zu-X Kommunikation über mehrere frei nutzbare Frequenzen.

Für die Fahrzeug-zu-X Kommunikation wird heute im Bereich WLAN (IEEE802.11p) eine dedizierte Frequenz verwendet (5.9 GHz). Diese Frequenz darf nur für C2X verwendet werden. Dadurch wird sichergestellt, dass C2X nicht durch andere Anwendungen gestört wird und damit auch Sicherheitsanwendungen über C2X möglich werden.

Prinzipiell nutzbare Frequenzen sind zusätzlich die frei einsetzbaren ISM-Bänder (z.B. 433MHz, 2.4GHz, 5.8GHz, etc.) oder ein Bereich um 868MHz.

Freie Frequenzen dürfen von beliebigen Anwendungen verwendet werden und sind daher nicht Störungsfrei. Daher sind sie bisher nicht für Anwendungen in der Fahrzeugsicherheit anwendbar.

Hier setzen die elften Ausführungsbeispiele an. Um die Sicherheit der Übertragung zu erhöhen, werden mehrere freie verwendbare Kanäle auf unterschiedlichen Frequenzen in unterschiedlichen (oder evtl. sogar gleichen) Frequenzbändern (also z.B. 2.4 GHz, etc.) gleichzeitig verwendet. In der einfachsten Form wird auf allen Kanälen die gleiche Information gesendet und damit die Redundanz erhöht.

Eine bessere Verwendung der verfügbaren Kanäle erzielt man jedoch durch Techniken, wie sie bei RAID für Festplatten verwendet werden. Hierbei entspricht ein Kommunikationskanal laut der vorliegenden Erfindung einer Festplatte in einem RAID-Verbund. So könnte bei der Verwendung von 3 Kanälen ähnliche RAID 5 bei Festplatten eine Erhöhung des Durchsatzes bei gleichzeitig erhöhter Übertragungssicherheit erreicht werden, indem die Information auf die einzelnen Kanäle aufgeteilt wird und dabei immer Paritäts- oder Kontrollinformationen zusätzlich in den Kanälen transportiert werden. Dadurch wird sichergestellt, dass beim Empfang von nur 2 der 3 Kanälen trotzdem die Daten rekonstruiert werden.

Stehen nur 2 Kanäle oder mehr als 3 Kanäle zur Verfügung können analog des obigen Beispiels andere RAID Varianten bzw. deren Analogien verwendet werden. Je nach Ausrichtung kann dabei entweder mehr Wert auf die Übertragungsgeschwindigkeit oder auf die Übertragungssicherheit gelegt werden.

Ist die Übertragungsgeschwindigkeit der unterschiedlichen Kanäle nicht gleich groß, so können die schnelleren Kanäle "Partitioniert" werden, d.h. der schnelle Kanal wird Blöcke zerlegt, die periodisch nacheinander übertragen werden (also z.B. 1-2-3-1-2-3-1-2-3 ...) und ein Block wird dann der Übertragung in den anderen Kanälen zugeordnet. So kann z.B. ein schneller Kanal in 3 Blöcke zerlegt werden, wobei der 1. Block für die RAID-Übertragung verwendet wird und die anderen beiden Blöcke für andere Anwendungen zur Verfügung stehen. Diese Blockbildung kann jedoch auch dazu verwendet werden, um bei nur 2 Kanälen trotzdem eine RAID-Übertragung zu ermöglichen, die 3 Kanäle benötigt, indem die jeweiligen Blöcke wie ein eigener Kanal behandelt werden.

Diese Technik kann auch mit einer C2X-Kommunikation nach IEEE802.11p kombiniert werden, wobei hier 802.11p die Geschwindigkeit vorgibt und daher nur Kanäle mit einer ähnlichen Geschwindigkeit verwendet werden können. Bei langsameren Kanälen können auf diesen nur Checksummen, etc. zur Absicherung übermittelt werden oder nur eine reduzierte Auswahl an Daten, die dann Analog dem Block-Gedanken den innerhalb von 802.11p übertragenen Daten zugeordnet werden. Geht es nur um die prinzipiellen Daten, so können die Daten auch komprimiert übertragen werden, wodurch zwar Auflösung verloren geht, jedoch immer noch eine Absicherung der 802.11p stattfinden kann.

Zusätzlich zu den freien Frequenzen und 5.9 GHz kann auch Mobilfunk (GPRS, UMTS, LTE) als Kanal verwendet werden.

Durch die Verwendung von im Fahrzeug auch für andere Anwendungen vorhandener Funkhardware entstehen keine zusätzlichen Hardwareaufwände für die C2X Kommunikation.

### 1. Beispiel:

Zur Übertragung stehen 433 MHz, 868 MHz und 2.4 GHz zur Verfügung. Daher wird ähnlich RAID 5 die Information auf die einzelnen Kanäle verteilt, zusammen mit Kontrolldaten. Dadurch wird ein höherer Datendurchsatz im Vergleich zu exakten gleichen Daten auf den 3 Kanälen erzielt.

### 2. Beispiel:

Zur Übertragung stehen 433 MHz und 2.4 GHz zur Verfügung. Da über 2.4GHz deutlich mehr Daten in derselben Zeit übertragen werden können als über 433 MHZ wird der Kanal bei 2.4 GHz in mehrere Blöcke zerlegt, wobei jeder Block eine Zeit T_B lang ist und sich nach der Loopzeit T_L wiederholt. Die ersten beiden Blöcke der Länge T_B innerhalb einer Loop T_L werden für eine Übertragung entsprechend RAID 5 verwendet, der dritte dafür notwendige Kanal ist bei 433 MHz. Die freien Blöcke bei 2.4GHz werden für normale Internetanwendungen verwendet.

### 3. Beispiel:

Es stehen Kanäle auf 433 MHz, 868 MHz, 2.4 GHz und 5.8 GHz zur Verfügung. Diese werden analog einem RAID 10 verschaltet, um sowohl eine höhere Datenrate, als auch eine höhere Übertragungssicherheit zu erzielen.

### 4. Beispiel:

Zusätzlich zu 802.11p über 5.9GHz werden noch 868MHz verwendet. 802.11p muss auch ohne die 868MHz funktionieren, daher werden dort keine Anpassungen unternommen. Da 868MHz nur niedrigere Datenraten als 5.9GHz ermöglicht, werden auf 868MHz jeweils nur Bruchteile der Daten übermittelt, damit diese dann redundant sind.

Beispiele für die verschiedenen RAID Versionen finden sich z.B. unter http://de.wikipedia.org/wiki/RAID.

### Zwölfte Ausführungsbeispiele:

Diebstahlschutz über Fahrzeug-zu-X Kommunikation.

Bei Stolen Vehicle Tracking sendet eine gestohlenes Fahrzeug periodisch eine Information aus, wo es sich gerade befindet, oder es kann per Peilsender gesucht werden oder es kann die Position des Fahrzeugs abgefragt werden.

Wird ein Fahrzeug als gestohlen gemeldet, so wird per Infrastruktur zu Fahrzeug (I2C) Kommunikation das entsprechende Nummernschild oder/und die entsprechende Fahrgestellnummer oder/und eine andere eindeutige Kennung des Fahrzeugs per Broadcast in der vermuteten Aufenthaltsregion des Fahrzeugs versendet. Diese Meldung wird solange periodische wiederholt, bis das Fahrzeug wieder gefunden ist oder aufgegeben wird. Empfängt ein Fahrzeug auf diesem Weg seine eigene Fahrgestellnummer oder/und sein Nummernschild oder/und eine andere eindeutig Kennung, so wird die Privatsphäre für dieses Fahrzeug aufgehoben. Das heißt, es werden keine ID-Wechsel mehr durchgeführt sondern konstant die gleichen IDs verwendet. Das erleichtert das Verfolgen (Tracking) des Fahrzeugs. Zusätzlich versendet das Fahrzeug periodisch eine Kennung per Fahrzeug-zu-X Kommunikation (C2X), die das Fahrzeug als gestohlen identifiziert. Somit können sämtliche Fahrzeuge in Funkreichweite das Fahrzeug als gestohlen erkennen und evtl. die Polizei informieren oder die Polizei selbst kann das Fahrzeug leichter finden.

Um Missbrauch die vermeiden, darf eine Gestohlenmeldung nur von zertifizierten Stellen versendet werden. Mittels kryptografischen Methoden wird sichergestellt, dass diese Stellen durch das Fahrzeug authentifiziert werden können und dass die Kommunikation zwischen der zertifizierten Stelle und dem Fahrzeug nicht manipuliert werden kann.

Empfängt ein Fahrzeug eine solche Meldung, ist jedoch selbst nicht das gestohlene Fahrzeug, so merkt es sich diese Information und wiederholt diese unverändert (wg. Des kryptografischen Schutzes) für einen Zeitraum T in periodischen Abständen per Nahbereichskommunikation. Das Fahrzeug fungiert also quasi als Relaisstation. So wird sichergestellt, dass nicht das Abschalten einer Kommunikationsverbindung für Infrastruktur-zu-Fahrzeug Kommunikation das Auffinden des gestohlenen Fahrzeugs verhindern kann.

Bei vorhandener Kommunikationsschnittstelle ist keine zusätzliche Hardware notwendig.

### 1. Beispiel:

Ein Fahrzeug wird bei der Polizei in Frankfurt als gestohlen gemeldet. Zuletzt wurde das Fahrzeug 2 Stunden vor der Meldung gesehen. Daraufhin wird eine Meldung per Infrastrukturzu-Fahrzeug Kommunikation mit der Fahrgestellnummer und dem Nummernschild des Fahrzeugs im Umkreis von 400km um Frankfurt versendet. Das gesuchte Fahrzeug empfängt die Information und sendet daraufhin per Nahbereichskommunikation eine Kennung aus, dass es gestohlen wurde und ändert seine C2X-ID, etc. nicht mehr.

### 2. Beispiel:

Ein Fahrzeug wird bei der Polizei in Frankfurt als gestohlen gemeldet. Zuletzt wurde das Fahrzeug 1 Stunde vor der Meldung gesehen. Daraufhin wird eine Meldung per Infrastruktur-zu-Fahrzeug Kommunikation mit der Fahrgestellnummer und dem Nummernschild des Fahrzeugs im Umkreis von 200km um Frankfurt versendet. Das gesuchte Fahrzeug ist zu diesem Zeitpunkt abgestellt und kann daher die Meldung nicht empfangen. Die Meldung wird weiterhin periodisch versendet. Nach einigen Stunden wird das Fahrzeug wieder gestartet und empfängt kurz danach die Meldung. Daraufhin sendet es per Nahbereichskommunikation eine Kennung aus, dass es gestohlen wurde und ändert seine C2X-ID, etc. nicht mehr.

### Dreizehnte Ausführungsbeispiele:

Signalunterscheidung zwischen RKE und C2X.

Wird RKE für C2X verwendet, so muss sehr schnell unterschieden werden können, ob es sich um ein RKE Signal handelt, oder um eine C2X Botschaft. Ansonsten würden sämtliche geparkten Fahrzeuge bei jeder C2X Botschaft "aufgeweckt" und würden sehr schnell die Fahrzeugbatterie aufbrauchen. Die Einführung eines sog. "fast fall back to sleep mode" ist zwingend notwendig.

Des Weiteren könnten die RKE-Nutzsignale nicht empfangen werden, da eine C2X-Kommunikation eine RKE-Kommunikation stören würde. Beispielsweise wird der Befehl "Fahrzeug öffnen" nicht verstanden, wenn zur gleichen Zeit ein C2X-Signal empfangsseitig im Fahrzeug analysiert wird.

Die bei derartigen Systemen angewandte Telegrammstruktur sieht vor dem Daten-Paket (Frame) eine sogenannte "Wake-Up"-Präambel (WUP) vor. Der fahrzeugseitige Empfänger befindet sich (bei abgestelltem Fahrzeug) im "Polling-Modus", bei dem er zyklisch aufwacht und empfangene Signale auf "Wake-Up"-Kriterien wie Empfangsfeld-Stärke, Modulationsparameter (siehe unten) oder einfache Bit-Muster prüft.

Zur Unterscheidung der beiden Modi bieten sich verschiedene Verfahren an:
- verschiedene Baudraten für RKE und C2X;
- verschiedene Frequenzhübe für RKE und C2X;
- verschiedene Modulationsarten für RKE und C2X (ASK, FSK, PSK, QPSK, SS etc.);
- verschiedene Kanäle für RKE und C2X;
- verschiedene Frequenzen für RKE und C2X;
- verschiedene Feldstärkepegel für RKE und C2X;
- Manchester Code Detection zur Unterscheidung von RKE und C2X (Code Violation oder Muster-Erkennung);
- unterschiedliche Daten Pattern für Unterscheidung RKE und C2X (auch innerhalb der sog. Wake-Up Preamble);
- Auswertung des Frequenzfehlers zur Bestimmung der Zugehörigkeit Sender / Empfänger.

Es sind auch Kombinationen dieser Verfahren möglich.

Ziel all dieser Verfahren ist es, dass ein parkendes Auto sehr schnell erkennen kann, ob eine Botschaft für das Auto gedacht ist oder ob es sich um eine C2X Botschaft für den Verkehr handelt.

Vorteile dieser dreizehnten Ausführungsbeispiele sind:
- Sichere Unterscheidung zwischen C2X- und RKE-Funktionen;
- Co-Existenz der unterschiedlichen Funkdienste wird ermöglicht;
- Verringerung/Beseitigung des Ruhestromproblems, Erhöhung der Batterielebensdauer.

### Vierzehnte Ausführungsbeispiele:

Informationen von Schilderbrücken mittels RKE.

Zur Verkehrsbeeinflussung werden dynamische Verkehrsschilder verwendet, um z.B. die Geschwindigkeitsbeschränkung an die Gegebenheiten anzupassen. Diese dynamischen Schilder sind jedoch zum Teil mit Kamerasystemen sehr schwer automatisiert lesbar und damit bleibt der Fahrer wieder auf sich alleine gestellt.

Hier setzen die vierzehnten Ausführungsbeispiele an. Viele moderne Fahrzeuge sind mit einem Funkschlüssel ausgerüstet, der es ermöglicht, das Fahrzeug mittels Funk zu öffnen. Diese Kommunikationstechnik kann nun dazu verwendet werden, die Informationen der dynamischen Verkehrsschilder den vorbeifahrenden Fahrzeugen zur Verfügung zu stellen. Dazu werden die dynamischen Verkehrsschilder mit Sendern ausgerüstet, die auf den typischen Frequenzbändern der RKE-Systeme senden (z.B. 434 MHz und 868 MHz).

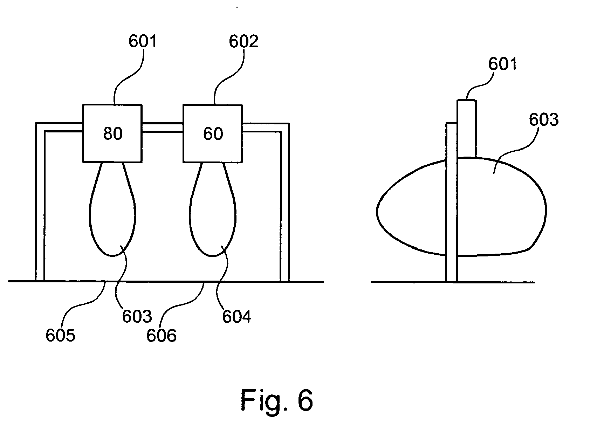

Da die Reichweite der normalen RKE-Systeme im Bereich von 10 m liegt bietet es sich an, gerichtete Antennen zu verwenden, um damit einerseits die Reichweite auf den notwendigen Bereich zu erweitern und andererseits die Information nur dort zu verbreiten, wo sie interessant ist. So bietet es sich bei Schilderbrücken an, die Information über die Geschwindigkeitsbeschränkung für jede Spur getrennt zu übertragen (siehe Fig. 6, in der eine mögliche Form der Antennenkeulen für eine spurgenaue Übermittlung der Information von einer Schilderbrücke in Vorderansicht und Seitenansicht gezeigt ist). Die Fahrbahn weist zwei Fahrspuren 605, 606 auf, über denen jeweils ein Schild 601, 602 angeordnet ist. Jedes Schild strahlt ein keulenförmiges Signal 603, 604 aus.

Zusätzlich können noch die Geschwindigkeitsbeschränkungen für die anderen Spuren mit übertragen werden. Dabei bietet es sich jedoch an, die Geschwindigkeitsbeschränkung der eigenen Spur häufiger zu übertragen um sicher zu stellen, dass diese auch von sehr schnellen Fahrzeugen empfangen wird. Kann die Geschwindigkeit der Fahrzeuge gemessen werden (z.B. über C2X, egal mit welcher Kommunikationstechnik), kann das Protokoll entsprechend angepasst werden. Ist z.B. nicht mit sehr schnellen Fahrzeugen zu rechnen, so muss auch die Information für die eigene Spur nicht häufiger übertragen werden.

Anstelle der Geschwindigkeitsbeschränkung können auch beliebige andere Informationen übertragen werden, wie z.B. Überholverbote, Gefahrenwarnungen, Spursperrungen, Stauwarnungen, Kurvenwarnungen, etc. Zum einfacheren Verständnis wurde jedoch im Text hauptsächlich die Geschwindigkeitsbeschränkung als Beispiel verwendet.

Anstelle von Schilderbrücken oder dynamischen Verkehrsschildern können auch mobile Verkehrsschilder, wie z.B. bei Baustellen oder (großen) Veranstaltungen mit der Technik ausgerüstet werden.

Da die Kommunikationstechnik bereits im Auto vorgesehen ist, ist sie sehr preiswert verfügbar.

### 1. Beispiel:

Fährt ein Fahrzeug mit 250km/h (entspricht ca. 70m/s) und wird davon ausgegangen, dass die Übermittlung der Geschwindigkeitsbeschränkung mit Headern, etc. 10 Byte (entspricht 80 Bit) benötigt und wird ferner davon ausgegangen, dass mit 9600 Baud gesendet wird, so ist eine Kommunikationsverbindung über ca. 60 cm notwendig. Das bedeutet, dass die Antennen so entwickelt werden können, dass die Keule im Empfangsbereich ca. 120 cm (für Redundanz) Streckenlänge überstreicht. Bei 1200 Baud sind 5 m Kommunikationsverbindung notwendig, was 10 m Streckenlänge entspricht. Diese Abschätzung zeigt schon, dass nur sehr wenig Reichweite notwendig ist, da nur wenige Informationen übertragen werden müssen (im Prinzip nur die Geschwindigkeitsbeschränkung bzw. die Schilderinformation plus die zwingend notwendigen Headerinformationen zur Identifikation der Nachricht).

### 2. Beispiel:

Auf einer Autobahn kann die Standspur zusätzlich freigegeben werden, falls dies notwendig ist. Dazu ist ein dynamisches Verkehrsschild am Straßenrand angebracht. Dieses Straßenschild sendet nun zusätzlich noch auf RKE den Freigabestatus der Standspur an die Fahrzeuge der anderen Spuren aus (z.B. der anderen 4 Spuren).

### 3. Beispiel:

Auf einem Autobahnabschnitt (z.B. A5 bei Frankfurt) wird die Geschwindigkeitsbeschränkung Fahrspurgenau mittels dynamischer Schilder angegeben. Diese Information wird zusätzlich Fahrspurgenau mittels RKE übermittelt. Zusätzlich enthält jede diese Botschaften noch die Geschwindigkeitsbeschränkungen der anderen Spuren. Über die Messung der Geschwindigkeit der Fahrzeuge wurde erkannt, dass alle Fahrzeuge mit relativ niedriger Geschwindigkeit die Schilderbrücken passieren. Daher werden alle Geschwindigkeitsbeschränkungen in einer Botschaft versendet und keine Redundanz für die eigene Spur eingebaut.

### 4. Beispiel:

Über eine Schilderbrücke wird vor einer Gefahr auf der Spur gewarnt, z.B. in Folge eines Unfalls. Diese Information wird der betroffenen Spur auch mittels RKE übermittelt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Fünfzehntes Ausführungsbeispiele:

Fahrzeug-zu-X (C2X) Kommunikation mittels WLAN ist Stand der Forschung. Die zusätzliche Verwendung von Remote Keyless Entry (RKE) Systemen für Fahrzeug-zu-X Kommunikation wurde bereits einführend dargestellt.

Bei Fahrzeug-zu-X Kommunikation wird eine Reichweite von ca. 500m angestrebt. Ist diese Reichweite nicht notwendig, weil sich z.B. viele Fahrzeuge in der Umgebung befinden, wird ein sogenanntes Congestion Control eingesetzt, dass einerseits das Aussenden und Weitersenden von Nachrichten regelt, andererseits aber auch die Ausgangsleistung des Kommunikationsmoduls mindert.

Bei der Kodierung der Kommunikation stehen mehrere Verfahren zur Verfügung. Typischerweise unterscheiden sich diese in ihrer Robustheit und damit in der Reichweit bei gleicher Ausgangsleistung sowie in ihrer Datenrate.

Je nach Situation, in der sich das Fahrzeug befindet, wird eine andere Kodierung für die jeweilige Kommunikation verwendet, um die unterschiedlichen Anforderungen optimal abzudecken.

### 1. Beispiel hierfür ist:

Ein Fahrzeug fährt in ländlichen Gebieten auf Straßen ohne viel Verkehr. Hier sind keine hohen Datenraten notwendig, da wenige Kommunikationsteilnehmer vorhanden sind. Durch die Umgebungsbedingungen ist jedoch eine robuste Übertragung notwendig. Daher wird eine entsprechende Kodierung verwendet.

### 2. Beispiel hierfür ist:

Ein Fahrzeug steht im Stau. Hier ist keine hohe Reichweite notwendig, da es in der Umgebung sehr viele Fahrzeuge gibt, die die Botschaft weitersenden könnten (falls notwendig). Daher wird eine Kodierung gewählt, die eine möglichst hohe Datenrate zulässt und damit pro Fahrzeug eine geringe Kanalbelegung erzeugt.

### 3. Beispiel hierfür ist:

Ein Fahrzeug bildet das Ende eines Staus. Es ist wichtig, dass möglichst alle Fahrzeuge, die sich von hinten nähern, diese Information bekommen, um gewarnt zu sein. Daher wird eine Kodierung gewählt, die möglichst robust ist und damit große Reichweiten erzielt.

### 4. Beispiel hierfür ist:

Ein Fahrzeug bewegt sich mit niedriger Geschwindigkeit und befindet sich nicht in einer sicherheitskritischen Situation, weder für sich, noch für andere. Daher sind hohe Reichweiten nicht notwendig und es kann eine Kodierung verwendet werden, die hohe Datenraten zulässt.

Das eben beschriebene kann für jegliche Ausprägung von C2X verwendet werden, also auch für C2X auf Basis von z.B. RKE.

Idealerweise sind die Empfänger der Fahrzeuge erfindungsgemäß so ausgelegt, dass sie sämtliche Kodierungsvarianten dekodieren können und nicht in einem speziellen Modus sein müssen, um die unterschiedlichen Kodierungen empfangen zu können. Dadurch wird sichergestellt, dass ein Fahrzeug, das mit Kodierung A sendet, auch Botschaften mit Kodierung B empfangen kann. Besonders vorteilhaft ist, dass man einer Hardwarelösung ein weiten Bereich abgedeckt werden.

### 1. Beispiel zu Kodierung:

In der Norm IEEE802.15.4 gibt es zwei Modi. Einmal wird mit BPSK kodiert, was zu Datenraten von ca. 20kBit führt. Die andere Variante wird mit QPSK kodiert, was zu Datenraten von ca. 100kBit führt, jedoch eine geringere Reichweite als BPSK erzielt. Zuerst ist der Sender daher im BPSK Modus, damit Nachrichten auch wirklich an den Empfänger kommen. Nun bekommt das Fahrzeug eine Warnung über ein Stauende und steht auch kurz darauf im Stau. Zuerst sendet es weiter mit BPSK, um andere Fahrzeuge vor dem Stauende zu warnen. Nachdem sich jedoch einige Fahrzeuge hinter dem eigenen Fahrzeug im Stau eingereiht haben, wechselt das Fahrzeug zu QPSK, um höhere Datenraten zur Verfügung zu haben, und sendet in regelmäßigen Abständen eine kurze Botschaft an die umliegenden Fahrzeuge, damit jedes Fahrzeug im Stau weiterhin weiß, wie groß ungefähr die Ausmaße des Staus sind.

## Patentansprüche

1. Kommunikationseinrichtung für ein Fahrzeug zum drahtlosen Übertragen von fahrzeugrelevanten Daten an ein anderes Fahrzeug oder eine Infrastruktur, die Kommunikationseinrichtung aufweisend: eine erste Kommunikationseinheit (115, 116) zum Übermitteln von ersten fahrzeugrelevanten Daten an das andere Fahrzeug; eine zweite Kommunikationseinheit (121, 124) zum Übermitteln von ausgewählten zweiten fahrzeugrelevanten Daten an das andere Fahrzeug,
**dadurch gekennzeichnet**,
die ersten fahrzeugrelevanten Daten mit einer ersten bandbegrenzten Frequenz übermittelt werden und die zweiten fahrzeugrelevanten Daten mit einer zweiten bandbegrenzten Frequenz übermittelt werden, die geringer ist als die erste Frequenz, wobei die zweite Kommunikationseinheit (121, 124) als drahtlose Zugangs- und Fahrtberechtigungseinheit ausgeführt ist und die ersten und die zweiten Daten jeweils eine Fahrzeugidentifikation aufweisen und eine Zuordnung der ersten Daten zu den zweiten Daten über diese Fahrzeugidentifikation erfolgt.

2. Kommunikationseinrichtung nach Anspruch 1,
wobei die erste Kommunikationseinheit (115, 116) zum Übermitteln der ersten fahrzeugrelevanten Daten auf Basis von WLAN ausgeführt ist.

3. Kommunikationseinrichtung nach einem der vorhergehenden Ansprüche,
wobei es sich bei den zweiten Daten um Basisinformationen handelt, ausgewählt aus der Gruppe umfassend eine Fahrzeugidentifikation, eine Position des Fahrzeugs, eine Geschwindigkeit des Fahrzeugs und eine Bewegungsrichtung des Fahrzeugs.

4. Kommunikationseinrichtung nach einem der vorhergehenden Ansprüche,
wobei als zweite fahrzeugrelevante Daten nur Daten übermittelt werden, die sich hinsichtlich der letzten Übermittlung signifikant verändert haben.

5. Kommunikationseinrichtung nach einem der vorhergehenden Ansprüche,
wobei die ersten Daten und die zweiten Daten im selben Format übermittelt werden.

6. Kommunikationseinrichtung nach einem der vorhergehenden Ansprüche,
wobei die Kommunikationseinrichtung zur Kreuzungsassistenz ausgeführt ist.

7. Kommunikationseinrichtung nach einem der vorhergehenden Ansprüche,
wobei die Kommunikationseinrichtung die zweiten Daten nur dann übermittelt, wenn der Motor des Fahrzeugs läuft, der Warnblinker aktiviert ist oder ein Unfall detektiert wurde.

8. Kommunikationseinrichtung nach einem der vorhergehenden Ansprüche,
wobei zur Congestion Control bei der Kommunikation über die zweite Kommunikationseinheit Carrier Sense Multiple Access verwendet wird.

9. Kommunikationseinrichtung nach einem der vorhergehenden Ansprüche,
wobei die zweite Kommunikationseinheit (121, 124) zum Übermitteln nur von priorisierten Daten verwendet wird.

10. Kommunikationseinrichtung nach einem der vorhergehenden Ansprüche,
wobei die zweite Kommunikationseinheit (121, 124) zur Kommunikation zwischen der Kommunikationseinrichtung und einer Infrastruktur ausgeführt ist.

11. Kommunikationseinrichtung nach einem der vorhergehenden Ansprüche,
wobei zweite Kommunikationseinheit (121, 124) zur periodischen Übermittlung eines Suchbefehls an einen Fußgänger ausgeführt ist.

12. Kommunikationseinrichtung nach einem der vorhergehenden Ansprüche,
wobei die zweite Kommunikationseinheit (121, 124) zur Bereitstellung einer Redundanz für eine Sicherheitsanwendung des Fahrzeugs ausgeführt ist.

13. Kommunikationseinrichtung nach einem der vorhergehenden Ansprüche,
wobei die Kommunikationseinrichtung zur Fusion von Messdaten eines einfachen Umfeldsensors mit von einem anderen Fahrzeug oder einer Infrastruktur empfangenen Daten zur Situationsinterpretation ausgeführt ist.

14. Kommunikationseinrichtung nach einem der vorhergehenden Ansprüche,
wobei die erste Kommunikationseinheit ausgeführt ist zur Auswahl eines Kommunikationspartners und Festlegung, über welche Kommunikationseinrichtung und gegebenenfalls über welchen Kommunikationskanal weitere Kommunikation zwischen dem Fahrzeug und dem Kommunikationspartner stattfinden soll.

15. Kommunikationseinrichtung nach einem der vorhergehenden Ansprüche,
wobei die zweite Kommunikationseinheit ausgeführt ist, den Aufbau einer Kommunikationsverbindung nach außen und/oder die Annahme einer Kommunikationsverbindung freizugegeben.

16. Kommunikationseinrichtung nach einem der vorhergehenden Ansprüche,
ausgeführt zur Warnung eines benachbarten Fahrzeugs nach einem Unfall des eigenen Fahrzeugs über die zweite Kommunikationseinheit.

17. Kommunikationseinrichtung nach einem der vorhergehenden Ansprüche,
ausgeführt zum Aussenden einer Mitteilung bei Empfang einer eigenen Identifikationsnummer zum Diebstahlschutz.

18. Kommunikationseinrichtung nach einem der vorhergehenden Ansprüche,
wobei die Kommunikationseinrichtung einen Schlafmodus aufweist; und
wobei die Kommunikationseinrichtung ausgeführt ist im Schlafmodus entscheiden zu können, ob es sich bei einer empfangenen Nachricht um eine Nachricht speziell für das Fahrzeug handelt oder um eine allgemeine C2X Nachricht für eine Vielzahl an Fahrzeugen.

19. Kommunikationseinrichtung nach einem der vorhergehenden Ansprüche,
ausgeführt zum Empfang von Nachrichten eines Verkehrszeichens (601) durch die zweite Kommunikationseinheit und zur Weiterverwertung der empfangenen Nachricht durch ein Fahrerassistenzsystem.

20. Fahrerassistenzsystem mit einer Kommunikationseinrichtung nach einem der vorhergehenden Ansprüche 1 bis 19.

21. Fahrzeug mit einer Kommunikationseinrichtung nach einem der vorhergehenden Ansprüche 1 bis 19.

22. Verwendung einer Kommunikationseinrichtung nach einem der Ansprüche 1 bis 19 in einem Fahrzeug.

23. Verfahren zur Übertragung von fahrzeugrelevanten Daten eines Fahrzeugs über mobile Kommunikation an ein anderes Fahrzeug oder Infrastruktur, das Verfahren aufweisend die Schritte:
Übermitteln von ersten fahrzeugrelevanten Daten an das andere Fahrzeug durch eine erste Kommunikationseinheit (115, 116) ;
Übermitteln von ausgewählten zweiten fahrzeugrelevanten Daten an das andere Fahrzeug durch eine zweite Kommunikationseinheit (121, 124).
**dadurch gekennzeichnet**,
die ersten fahrzeugrelevanten Daten mit einer ersten bandbegrenzten Frequenz übermittelt werden; und
wobei die zweiten fahrzeugrelevanten Daten mit einer zweiten bandbegrenzten Frequenz übermittelt werden, die geringer ist als die erste Frequenz und die ersten und die zweiten Daten jeweils eine Fahrzeugidentifikation aufweisen und eine Zuordnung der ersten Daten zu den zweiten Daten über diese Fahrzeugidentifikation erfolgt.

24. Computerprogrammprodukt, das, wenn es auf einem Prozessor ausgeführt wird, den Prozessor anleitet, die folgenden Schritte durchzuführen:
Übermitteln von ersten fahrzeugrelevanten Daten an das andere Fahrzeug durch eine erste Kommunikationseinheit (115, 116);
Übermitteln von ausgewählten zweiten fahrzeugrelevanten Daten an das andere Fahrzeug durch eine zweite Kommunikationseinheit (121, 124).
**dadurch gekennzeichnet**,
die ersten fahrzeugrelevanten Daten mit einer ersten bandbegrenzten Frequenz übermittelt werden; und
wobei die zweiten fahrzeugrelevanten Daten mit einer zweiten bandbegrenzten Frequenz übermittelt werden, die geringer ist als die erste Frequenz und die ersten und die zweiten Daten jeweils eine Fahrzeugidentifikation aufweisen und eine Zuordnung der ersten Daten zu den zweiten Daten über diese Fahrzeugidentifikation erfolgt.

25. Computerlesbares Medium, auf dem ein Computerprogrammprodukt gespeichert ist, das, wenn es auf einem Prozessor ausgeführt wird, den Prozessor anleitet, die folgenden Schritte durchzuführen:
Übermitteln von ersten fahrzeugrelevanten Daten an das andere Fahrzeug durch eine erste Kommunikationseinheit (115, 116);
Übermitteln von ausgewählten zweiten fahrzeugrelevanten Daten an das andere Fahrzeug durch eine zweite Kommunikationseinheit (121,124),
**dadurch gekennzeichnet**,
die ersten fahrzeugrelevanten Daten mit einer ersten bandbegrenzten Frequenz übermittelt werden; und
wobei die zweiten fahrzeugrelevanten Daten mit einer zweiten bandbegrenzten Frequenz übermittelt werden, die geringer ist als die erste Frequenz und die ersten und die zweiten Daten jeweils eine Fahrzeugidentifikation aufweisen und eine Zuordnung der ersten Daten zu den zweiten Daten über diese Fahrzeugidentifikation erfolgt.

## Claims

1. Communication device for a vehicle for wirelessly transmitting vehicle-related data to another vehicle or infrastructure, said communication device having: a first communication unit (115, 116) for transmitting first vehicle-related data to the other vehicle; a second communication unit (121, 124) for transmitting selected second vehicle-related data to the other vehicle,
**characterized in that**
the first vehicle-related data are transmitted at a first band-limited frequency and the second vehicle-related data are transmitted at a second band-limited frequency, which is lower than the first frequency,
wherein the second communication unit (121, 124) is in the form of a wireless access and driving authorization unit and
the first and second data respectively have a vehicle identification and the first data are associated with the second data by means of said vehicle identification.

2. Communication device according to Claim 1,
wherein the first communication unit (115, 116) is designed for transmitting the first vehicle-related data on the basis of WLAN.

3. Communication device according to either of the preceding claims,
wherein the second data are basic information, selected from the group comprising a vehicle identification, a position of the vehicle, a speed of the vehicle and a direction of movement of the vehicle.

4. Communication device according to one of the preceding claims,
wherein the second vehicle-related data transmitted are only data which have altered significantly from the last transmission.

5. Communication device according to one of the preceding claims,
wherein the first data and the second data are transmitted in the same format.

6. Communication device according to one of the preceding claims,
wherein the communication device is designed for junction assistance.

7. Communication device according to one of the preceding claims,
wherein the communication device transmits the second data only if the engine of the vehicle is running, the hazard lights have been activated or an accident has been detected.

8. Communication device according to one of the preceding claims,
wherein carrier sense multiple access is used for congestion control in the communication via the second communication unit.

9. Communication device according to one of the preceding claims,
wherein the second communication unit (121, 124) is used for transmitting only prioritized data.

10. Communication device according to one of the preceding claims,
wherein the second communication unit (121, 124) is designed for communication between the communication device and an infrastructure.

11. Communication device according to one of the preceding claims,
wherein the second communication unit (121, 124) is designed for periodically transmitting a search command to a pedestrian.

12. Communication device according to one of the preceding claims,
wherein the second communication unit (121, 124) is designed for providing redundancy for a safety application in the vehicle.

13. Communication device according to one of the preceding claims,
wherein the communication device is designed for fusing measurement data from a simple ambient sensor with data received from another vehicle or an infrastructure for the purpose of situation interpretation.

14. Communication device according to one of the preceding claims,
wherein the first communication unit is designed for selecting a communication partner and stipulating which communication device and possibly which communication channel is intended to be used for the further communication between the vehicle and the communication partner.

15. Communication device according to one of the preceding claims,
wherein the second communication unit is designed to enable a communication link to be set up to the outside and/or to enable a communication link to be accepted.

16. Communication device according to one of the preceding claims,
designed for warning an adjacent vehicle following an accident involving its own vehicle via the second communication unit.

17. Communication device according to one of the preceding claims,
designed for transmitting a notification upon receipt of an inherent identification number for theft prevention.

18. Communication device according to one of the preceding claims,
wherein the communication device has a sleep mode; and
wherein the communication device is designed to be able to decide, in sleep mode, whether a received message is a message specifically for the vehicle or is a general C2X message for a large number of vehicles.

19. Communication device according to one of the preceding claims,
designed for the receipt of messages from a road sign (601) by the second communication unit and for the further use of the received message by a driver assistance system.

20. Driver assistance system having a communication device according to one of the preceding Claims 1 to 19.

21. Vehicle having a communication device according to one of the preceding Claims 1 to 19.

22. Use of a communication device according to one of Claims 1 to 19 in a vehicle.

23. Method for transmitting vehicle-related data from a vehicle to another vehicle or infrastructure by means of mobile communication, said method having the following steps:
first vehicle-related data are transmitted to the other vehicle by a first communication unit (115, 116);
selected second vehicle-related data are transmitted to the other vehicle by a second communication unit (121, 124), **characterized in that**
the first vehicle-related data are transmitted at a first band-limited frequency; and
wherein the second vehicle-related data are transmitted at a second band-limited frequency, which is lower than the first frequency, and
the first and second data respectively have a vehicle identification and
the first data are associated with the second data by means of said vehicle identification.

24. Computer program product which, when executed on a processor, instructs the processor to perform the following steps:
transmission of first vehicle-related data to the other vehicle by a first communication unit (115, 116);
transmission of selected second vehicle-related data to the other vehicle by a second communication unit (121, 124), **characterized in that**
the first vehicle-related data are transmitted at a first band-limited frequency; and
wherein the second vehicle-related data are transmitted at a second band-limited frequency, which is lower than the first frequency, and
the first and second data respectively have a vehicle identification and
the first data are associated with the second data by means of said vehicle identification.

25. Computer-readable medium which stores a computer program product which, when executed on a processor, instructs the processor to perform the following steps:
transmission of first vehicle-related data to the other vehicle by a first communication unit (115, 116);
transmission of selected second vehicle-related data to the other vehicle by a second communication unit (121,124), **characterized in that**
the first vehicle-related data are transmitted at a first band-limited frequency; and
wherein the second vehicle-related data are transmitted at a second band-limited frequency, which is lower than the first frequency, and
the first and second data respectively have a vehicle identification and
the first data are associated with the second data by means of said vehicle identification.

## Revendications

1. Dispositif de communication pour un véhicule pour la transmission sans fil de données pertinentes du véhicule à un autre véhicule ou à une infrastructure, le dispositif de communication comprenant : une unité (115, 116) de communication pour la transmission de premières données pertinentes du véhicule à l'autre véhicule ; une deuxième unité (121, 124) de communication pour la transmission de deuxièmes données sélectionnées pertinentes du véhicule à l'autre véhicule,
**caractérisé**
**en ce que** les premières données pertinentes du véhicule sont transmises à une première fréquence à bande limitée et les deuxièmes données pertinentes du véhicule sont transmises à une deuxième fréquence à bande limitée, qui est plus petite que la première fréquence, la deuxième unité (121, 124) de communication étant réalisée en unité sans fil d'autorisation d'accès et de passage et les premières et les deuxièmes données ayant respectivement une identification de véhicule et une association des premières données aux deuxièmes données s'effectuant par cette identification de véhicule.

2. Dispositif de communication suivant la revendication 1,
dans lequel la première unité (115, 116) de communication est réalisée pour la transmission des premières données pertinentes du véhicule sur la base de WLAN.

3. Dispositif de communication suivant l'une des revendications précédentes,
dans lequel les deuxièmes données sont des informations de base sélectionnées dans le groupe comprenant une identification de véhicule, une position du véhicule, une vitesse du véhicule et une direction de déplacement du véhicule.

4. Dispositif de communication suivant l'une des revendications précédentes,
dans lequel sont transmises comme deuxièmes données pertinentes du véhicule seulement des données qui se sont modifiées significativement par rapport à la dernière transmission.

5. Dispositif de communication suivant l'une des revendications précédentes,
dans lequel les premières données et les deuxièmes données sont transmises dans le même format.

6. Dispositif de communication suivant l'une des revendications précédentes,
dans lequel le dispositif de communication est réalisé pour l'assistance au croisement.

7. Dispositif de communication suivant l'une des revendications précédentes,
dans lequel le dispositif de communication transmet les deuxièmes données seulement lorsque le moteur du véhicule tourne, le signal de détresse est activé ou un accident a été détecté.

8. Dispositif de communication suivant l'une des revendications précédentes,
dans lequel, pour Congestion Control lors de la communication par la deuxième unité de communication, Carrier Sense Multiple Access est utilisé.

9. Dispositif de communication suivant l'une des revendications précédentes,
dans lequel la deuxième unité (121, 124) de communication est utilisée pour la transmission seulement de données ayant reçu la priorité.

10. Dispositif de communication suivant l'une des revendications précédentes,
dans lequel la deuxième unité (121, 124) de communication est réalisée pour la communication entre le dispositif de communication et une infrastructure.

11. Dispositif de communication suivant l'une des revendications précédentes,
dans lequel la deuxième unité (121, 124) de communication est réalisée pour la transmission périodique d'une instruction de recherche à un piéton.

12. Dispositif de communication suivant l'une des revendications précédentes,
dans lequel la deuxième unité (121, 124) de communication est réalisée pour la mise à disposition d'une redondance pour une application de sécurité du véhicule.

13. Dispositif de communication suivant l'une des revendications précédentes,
dans lequel le dispositif de communication est réalisé pour la fusion de données de mesure d'un simple capteur de champ périphérique avec des données d'interprétation de situation reçues d'un autre véhicule ou d'une infrastructure.

14. Dispositif de communication suivant l'une des revendications précédentes,
dans lequel la première unité de communication est réalisée pour choisir le dispositif de communication et, le cas échéant, le canal de communication, par lesquels une autre communication doit avoir lieu entre le véhicule et le partenaire de communication.

15. Dispositif de communication suivant l'une des revendications précédentes,
dans lequel la deuxième unité de communication est réalisée pour libérer l'établissement d'une liaison de communication vers l'extérieur et/ou la réception d'une liaison de communication.

16. Dispositif de communication suivant l'une des revendications précédentes,
réalisé pour avertir un véhicule voisin, par la deuxième unité de communication, après un accident du véhicule proprement dit.

17. Dispositif de communication suivant l'une des revendications précédentes,
réalisé pour émettre pour se protéger du vol un message à la réception d'un numéro d'identification propre.

18. Dispositif de communication suivant l'une des revendications précédentes,
dans lequel le dispositif de communication a un mode dormant et
dans lequel le dispositif de communication est réalisé pour pouvoir décider dans le mode dormant si un message reçu est un message spécial pour le véhicule ou un message général C2X pour une pluralité de véhicules.

19. Dispositif de communication suivant l'une des revendications précédentes,
réalisé pour la réception de message d'un panneau (601) de circulation routière par la deuxième unité de communication et pour l'exploitation du message reçu par un système d'assistance à la conduite.

20. Système d'assistance à la conduite ayant un dispositif de communication suivant l'une des revendications précédentes 1 à 19.

21. Véhicule ayant un dispositif de communication suivant l'une des revendications précédentes 1 à 19.

22. Utilisation d'un dispositif de communication suivant l'une des revendications 1 à 19 dans un véhicule.

23. Procédé de transmission de données pertinentes d'un véhicule par une communication mobile à un autre véhicule ou à une infrastructure, le procédé ayant les stades :
transmission de premières données pertinentes du véhicule à l'autre véhicule par une première unité (115, 116) de communication ;
transmission de deuxièmes données sélectionnées pertinentes du véhicule à l'autre véhicule par une deuxième unité (121, 124) de communication ;
**caractérisé**
**en ce qu'**on transmet les premières données pertinentes du véhicule à une première fréquence à bande limitée et
dans lequel on transmet les deuxièmes données pertinentes du fréquence, qui est plus petite que la première fréquence, et les premières et deuxièmes données ont respectivement une identification de véhicule et une association des premières données aux deuxièmes données s'effectue par cette identification de véhicule.

24. Produit de programme d'ordinateur, qui, lorsqu'il est réalisé sur un processeur, fait que le processeur effectue les stades suivants :
transmission de premières données pertinentes du véhicule à l'autre véhicule par une première unité (115, 116) de communication ;
transmission de deuxièmes données sélectionnées pertinentes du véhicule à l'autre véhicule par une deuxième unité (121, 124) de communication ;
**caractérisé**
**en ce qu'**on transmet les premières données pertinentes du véhicule à une première fréquence à bande limitée et
dans lequel on transmet les deuxièmes données pertinentes du véhicule à une deuxième fréquence à bande limitée, qui est plus petite que la première fréquence, et les premières et deuxièmes données ont respectivement une identification de véhicule et une association des premières données aux deuxièmes données s'effectue par cette identification de véhicule.

25. Support déchiffrable par ordinateur et sur lequel est mémorisé un produit de programme d'ordinateur, qui, lorsqu'il est réalisé sur un processeur, fait que le processeur effectue les stades suivants :
transmission de premières données pertinentes du véhicule à l'autre véhicule par une première unité (115, 116) de communication ;
transmission de deuxièmes données sélectionnées pertinentes du véhicule à l'autre véhicule par une deuxième unité (121, 124) de communication ;
**caractérisé**
**en ce qu'**on transmet les premières données pertinentes du véhicule à une première fréquence à bande limitée et
dans lequel on transmet les deuxièmes données pertinentes du véhicule à une deuxième fréquence à bande limitée, qui est plus petite que la première fréquence, et les premières et deuxièmes données ont respectivement une identification de véhicule et une association des premières données aux deuxièmes données s'effectue par cette identification de véhicule.
